(19) Europäisches Patentamt / European Patent Office / Office européen des brevets

(11) **EP 2 659 952 A1**

(12) **EUROPEAN PATENT APPLICATION**
published in accordance with Art. 153(4) EPC

(43) Date of publication:
**06.11.2013 Bulletin 2013/45**

(51) Int Cl.:
**B01D 63/10** (2006.01)    **B01D 69/06** (2006.01)
**B01D 69/12** (2006.01)

(21) Application number: **11853737.2**

(22) Date of filing: **27.12.2011**

(86) International application number:
**PCT/JP2011/080244**

(87) International publication number:
**WO 2012/091027 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010  JP 2010292162**
**02.12.2011  JP 2011264501**

(71) Applicant: **Toray Industries, Inc.**
**Tokyo 103-8666 (JP)**

(72) Inventors:
• **TAKAGI, Kentaro**
**Shiga 520-8558 (JP)**
• **KIMURA, Masahiro**
**1-1, Sonoyama 1-chome, Otsu-shi**
**Shiga, 520-8558 (JP)**
• **KOIWA, Masakazu**
**1-1, Sonoyama 1-chome, Otsu-shi**
**Shiga, 520-8558 (JP)**
• **HIROZAWA, Hiroho**
**1-1, Sonoyama 1-chome, Otsu-shi**
**Shiga, 520-8558 (JP)**

(74) Representative: **Hoefer & Partner**
**Pilgersheimer Straße 20**
**81543 München (DE)**

(54) **SEPARATION MEMBRANE ELEMENT**

(57)    A separation membrane element including: a perforated water collection tube; and an envelope-shaped membrane which is formed of a separation membrane and is wound around a periphery of the perforated water collection tube, in which the separation membrane has a difference in surface level of 100 to 2,000 $\mu$m on at least one surface thereof and has a strip-form region in each of both ends of the separation membrane in terms of the longitudinal direction of the perforated water collection tube, the strip-form region having an average difference in surface level of 50 $\mu$m or less.

*Fig. 2*

EP 2 659 952 A1

**Description**

TECHNICAL FIELD

The present invention relates to a separation membrane element to be used for separating a component contained in a fluid, e.g., a liquid or a gas, and relates to a process for producing the same.

BACKGROUND ART

There are various methods for separating a component contained in a fluid, e.g., a liquid or a gas. For example, with respect to techniques for removing ionic substances contained in seawater, brine water, or the like, use of techniques for separation with separation membrane elements is expanding in recent years as processes for energy saving and resource saving. The separation membranes for use in the techniques for separation with separation membrane elements are classified, by pore diameter and separating function, into microfiltration membranes, ultrafiltration membranes, nanofiltration membranes, reverse osmosis membranes, forward osmosis membranes, etc., and these membranes are in use, for example, in the case of producing drinkable water from seawater, brine water, water containing a harmful substance, or the like, for the production of industrial ultrapure water, and in wastewater treatment, recovery of a valuable substance, etc. Those separation membranes are properly used according to the components to be separated and the desired separation performance.

Membrane separation elements have a common feature that a raw fluid is fed to one surface of the separation membrane and a permeated fluid is obtained through the other surface thereof. A separation membrane element is configured by bundling a large number of separation membrane units of any of various shapes to obtain an increased membrane area so that a permeated fluid can be obtained in a large amount per unit element. Various kinds of elements, including the spiral type, hollow-fiber type, plate-and-frame type, rotating flat-membrane type, and flat-membrane integration type, are being produced according to applications and uses.

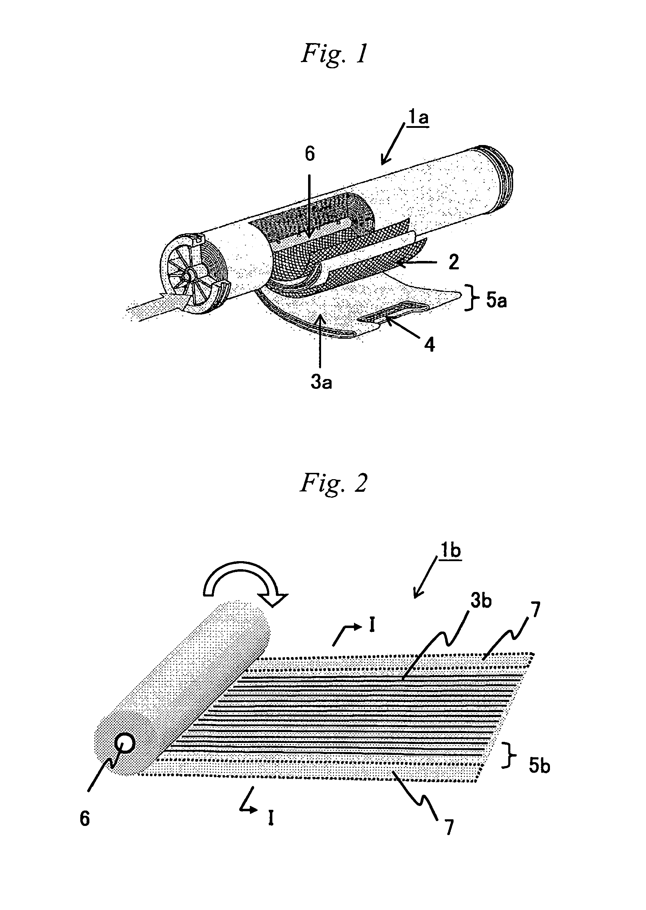

For example, a spiral type separation membrane element includes a perforated water collection tube and further includes a feed-side spacer, a separation membrane, and a permeate-side spacer which have been wound around the periphery of the perforated water collection tube. The feed-side spacer supplies a raw fluid to the feed-side surface of the separation membrane. The separation membrane separates a component contained in the raw fluid. The permeated-side spacer leads, to the perforated water collection tube, the permeated fluid which has passed through the separation membrane and been separated from the raw fluid. In the spiral type separation membrane element, the permeated fluid can be taken out in a large amount by applying a pressure to the raw fluid. In Fig. 1 is shown one example of such spiral type separation membrane elements.

As shown in Fig. 1, for producing the spiral type separation membrane element 1a, a net made of a polymer is disposed as a feed-side spacer 2 and a knit member called tricot is disposed as a permeated-side spacer 4. A separation membrane 3a is disposed on both sides of the permeated-side spacer 4 and is bonded to itself into an envelope shape to thereby form an envelope-shaped membrane 5a. A permeated-side fluid passage is formed inside of the envelope-shaped membrane 5a. This envelope-shaped membrane 5a is stacked alternately with the net 2, and a predetermined portion of an opening side of each envelope-shaped membrane is bonded to the peripheral surface of a perforated water collection tube 6. The envelope-shaped membranes are then wound spirally.

In recent years, there is a growing request for a reduction in fresh-water production cost, in particular, for a reduction in the cost of membrane element production. Techniques for cost reduction by improving the separation membrane, each passage membrane, and element membranes have been proposed. For example, patent document 1 proposes a spiral type separation membrane element obtained by stacking and bonding grooved flat-sheet membranes and winding the membranes around a perforated water collection tube. Patent document 1 proposes a technique in which two grooved flat-sheet membranes are thus stacked to thereby form a passage between the flat-sheet membranes and in which neither a feed-side spacer nor a permeated-side spacer is used. Meanwhile, patent documents 2 and 3 propose a technique in which a sheet separation membrane including both a porous support having surface irregularities and a separation active layer is used and in which neither a feed-side spacer, e.g., a net, nor a permeated-side spacer, e.g., tricot, is used.

BACKGROUND ART DOCUMENT

PATENT DOCUMENT

Patent Document 1: JP-A-63-69503

Patent Document 2: JP-A-2010-99590
Patent Document 3: JP-A-2010-125418

## SUMMARY OF THE INVENTION

## PROBLEMS THAT THE INVENTION IS TO SOLVE

However, those separation membrane elements have a problem that some of the raw fluid flows into the permeate side, and are not considered to have sufficiently stable separation performance.

Accordingly, an object of the invention is to improve the separation/removal performance of a separation membrane having surface irregularities.

## MEANS FOR SOLVING THE PROBLEMS

To attain the above object, a separation membrane element of the invention includes: a perforated water collection tube; and an envelope-shaped membrane which is formed of a separation membrane and is wound around a periphery of the perforated water collection tube, in which the separation membrane has a difference in surface level of 100 to 2,000 $\mu$m on at least one surface thereof and has a strip-form region in each of both ends of the separation membrane in terms of the longitudinal direction of the perforated water collection tube, the strip-form region having an average difference in surface level of 50 $\mu$m or less.

## ADVANTAGE OF THE INVENTION

According to the invention, a separation membrane element can be obtained in which not only a highly efficient and stable feed-side passage is formed due to the difference in surface level of the separation membrane but also the adhesion of the separation membrane to itself in strip-form ends of the envelope-shaped membrane has been enhanced. As a result, a high-performance high-efficiency separation membrane element which has both the high ability to remove components to be separated and high permeability when operated under high-pressure conditions can be obtained.

## BRIEF DESCRIPTION OF THE DRAWINGS

[Fig. 1] Fig. 1 is a partly developed slant view which diagrammatically shows the configuration of the members of a spiral type separation membrane element.
[Fig. 2] Fig. 2 is a partly developed slant view which shows an example of the separation membrane element of the invention.
[Fig. 3] Fig. 3 is a partly developed slant view which shows another example of the separation membrane element of the invention.
[Fig. 4] Fig. 4 is a partly developed slant view which shows still another example of the separation membrane element of the invention.
[Fig. 5] Fig. 5 is a partly developed slant view which shows a further example of the separation membrane element of the invention.
[Fig. 6] Fig. 6 is a sectional view taken on the line I-I of Fig. 2.
[Fig. 7] Fig. 7 is a sectional view which shows one example of the separation membrane according to the invention.
[Fig. 8] Fig. 8 is a sectional view which shows one example of the configuration of the separation membrane according to the invention.
[Fig. 9] Fig. 9 is a sectional view which shows another example of the configuration of the separation membrane according to the invention.
[Fig. 10] Fig. 10 is a plan view which shows a spacer in the form of stripes that is one example of the feed-side spacer.
[Fig. 11] Fig. 11 is a plan view which shows a spacer in the form of dots that is another example of the feed-side spacer.
[Fig. 12] Fig. 12 is a plan view that shows two separation membranes which face each other and in which the feed-side spacers overlap each other.
[Fig. 13] Fig. 13 is a slant view which shows a separation membrane that is being folded, with the feed-side surface thereof facing inward.

MODE FOR CARRYING OUT THE INVENTION

Modes for carrying out the invention are explained below.

I. Separation Membrane

<Summary of Configuration of the Separation Membrane>

The separation membrane can separate a component contained in a raw fluid. The separation membrane may, for example, include (i) a substrate, a separation function layer, and a porous supporting layer disposed between the substrate and the separation function layer. The separation membrane may alternatively have (ii) a configuration which includes a substrate and a separation function layer superposed over the substrate but which has no porous supporting layer between the substrate and the separation function layer. The separation membrane (ii) may include, as the separation function layer, a layer having the same configuration as the porous supporting layer contained in the separation membrane (i).

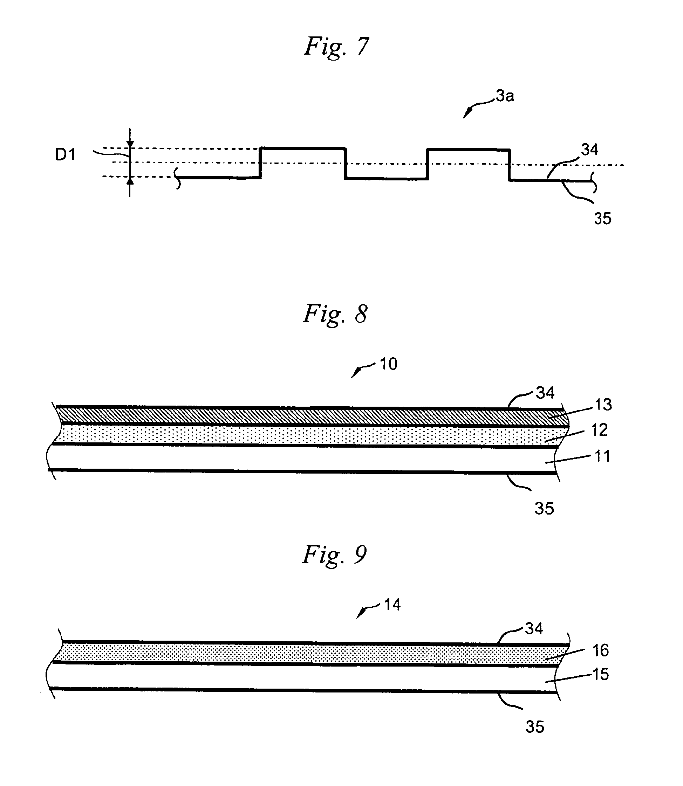

In Fig. 8 and Fig. 9 are respectively shown examples of the configuration of the separation membranes (i) and (ii).

As shown in Fig. 8, the separation membrane 10 includes a substrate 11, a separation function layer 13, and a porous supporting layer 12 disposed between the substrate 11 and the separation function layer 13.

As shown in Fig. 19, the separation membrane 14 includes a substrate 15 and a separation function layer 16 superposed on the substrate 15. No porous supporting layer 12 has been disposed between the substrate 15 and the separation function layer 16. As stated above, the same configuration as that of the porous supporting layer 12 can be applied to the separation function layer 16. The same configuration as that of the substrate 11 can be applied to the substrate 15.

In each separation membrane, the surface on the separation function layer side is shown as a feed-side surface 34, and the surface on the substrate side is shown as a permeate-side surface 35. As will be described later, when a raw fluid is fed to the feed-side surface 34, the raw fluid is separated into a permeated fluid which has passed through the separation membrane and moved to the surface 35 side and a concentrated fluid which remains on the surface 34 side of the separation membrane.

<Separation function layer>

In the separation membrane having the configuration (i), a crosslinked polymer is, for example, used as the separation function layer from the standpoints of pore diameter regulation and durability. Specifically, a polyamide separation function layer obtained by condensation-polymerizing a polyfunctional amine with a polyfunctional acid halide on a porous supporting layer such as that described later, an organic-inorganic hybrid separation function layer, and the like are suitable from the standpoint of separation performance.

The separation function layer in the separation membrane (i) can contain a polyamide as the main component. This separation membrane is suitable for use in the case of obtaining drinkable water from, for example, seawater, brine water, water containing harmful substances, or the like or in the production of industrial ultrapure water. The polyamide is, for example, a product of the polycondensation of a polyfunctional amine with a polyfunctional acid halide.

In this description, in the case where "a composition X contains a substance Y as the main component", the content of the substance Y in the composition X is preferably 50% by weight or higher, more preferably 60% by weight or higher, especially preferably 80% by weight or higher. The composition X may be constituted substantially of the substance Y only. The term "composition" is used as a conception which includes a mixture, a composite, compounds, etc.

Examples of the configuration of the polyamide and examples of the polyfunctional amine and polyfunctional acid halide will be shown in the section Process for Production. From the standpoint of chemical resistance, the separation function layer as a component of the separation membrane (i) may have an organic-inorganic hybrid structure which includes silicon element, etc. The separation function layer of an organic-inorganic hybrid structure is not particularly limited in the composition thereof. However, the hybrid structure can contain, for example, a polymer of (A) a silicon compound in which both a reactive group having an ethylenically unsaturated group and a hydrolysable group have been directly bonded to the silicon atom and/or (B) a compound which has an ethylenically unsaturated group and is not the silicon compound.

Namely, the separation function layer can contain at least one polymer selected from

- a polymer formed by condensing and/or polymerizing the compound (A) alone,
- a polymer formed by polymerizing the compound (B) alone, and
- a copolymer of the compound (A) and the compound (B).

Incidentally, such polymers may be condensates. In the copolymer of the compound (A) and the compound (B), the compound (A) may have been condensed through the hydrolyzable group. The compound B can polymerize by means of the ethylenically unsaturated group.

In the separation function layer, the content of the compound (A) is preferably 10% by weight or higher, more preferably 20 to 50% by weight. The content of the compound (B) in the separation function layer is preferably 90% by weight or less, more preferably 50 to 80% by weight. Furthermore, it is preferred that the compound (A)/compound (B) weight ratio should be, for example, from 1/9 to 1/1. When the contents and the weight ratio thereof are within these ranges, the polycondensate contained in the separation function layer has a relatively high degree of crosslinking and, hence, the components of the separation function layer are inhibited from being dissolved out during filtration with the membrane. As a result, stable filtration performance is rendered possible.

Incidentally, there are cases where the compound (A), the compound (B), and other compounds have formed compounds, e.g., polymers (including condensates). Consequently, when, for example, the "content of the compound (A) in the separation function layer" is discussed, the amount of the compound (A) includes the amount of components contained in the polycondensate which are derived from the compound (A). The same applies to the compound (B) and other compounds.

The separation function layer has no reactive group having an ethylenically unsaturated group, except for the reactive group of the compound (A). However, the separation function layer may contain a component derived from a silicon compound (C) having a hydrolyzable group. Examples of this compound (C) will be given later.

Such compounds (C) may be contained as a condensate of the compounds (C) alone, or may be contained as a condensate with a polymer of the compound (A) with the compound (B).

Next, the separation function layer as a component of the separation membrane (ii) is described in detail. The separation membrane (ii) is suitable for use in sewage treatment, etc.

The separation function layer in the separation membrane (ii) is not particularly limited so long as the layer has separating function and mechanical strength.

For example, the separation function layer is constituted of cellulose, a polyethylene resin, polypropylene resin, poly(vinyl chloride) resin, poly(vinylidene fluoride) resin, polysulfone resin, polyethersulfone resin, polyimide resin, polyetherimide resin, or the like. The separation function layer can contain any of these resins as the main component.

In particular, resins such as poly(vinyl chloride) resins, poly(vinylidene fluoride) resins, polysulfone resins, and polyethersulfone resins are preferred for use as the main component of the separation function layer, because film formation from solutions thereof is easy and these resins are excellent also in terms of physical durability and chemical resistance.

The separation function layer can be produced, for example, by casting an N,N-dimethylformamide (hereinafter referred to as DMF) solution of a polysulfone on the substrate which will be described later, i.e., a sheet of nonwoven fabric, in a given thickness and subjecting the applied solution to wet coagulation in water, as will be described later.

In the separation membrane (ii), it is preferred that the average pore diameter of one surface of the porous resin layer (i.e., the separation function layer) should be at least two times the average pore diameter of the other surface.

There are no particular limitations on the thickness of each separation function layer. The separation membrane (i) is suitable for use as, for example, reverse osmosis, forward osmosis, and nanofiltration membranes. In this case, the thickness of the separation function layer is preferably 5 to 3,000 nm from the standpoints of separation performance and permeability, and is especially preferably 5 to 300 nm from the standpoint of permeability.

In the separation membrane (i), the thickness of the separation function layer can be measured in accordance with a conventional method for measuring the thicknesses of separation membranes. For example, the thickness of the separation function layer can be determined by embedding the separation membrane in a resin, thereafter producing an ultrathin section thereof, subjecting the section to a treatment such as dyeing, and then examining the section with a transmission electron microscope. A main measuring method in the case where the separation function layer has a pleated structure is as follows. With respect to one pleat, a measurement is made at intervals of 50 nm along the longitudinal direction of the cross-section of the pleated structure located above the porous supporting layer, and this measurement is conducted on each of 20 pleats. The measured values are averaged to determine the thickness of the separation function layer.

On the other hand, in the case of a separation membrane having the configuration (ii), the thickness of the separation function layer is preferably 1 to 500 $\mu$m, more preferably 5 to 200 $\mu$m. When the thickness of the separation function layer is 1 $\mu$m or larger, this separation function layer is less apt to develop defects such as cracks and, hence, the filtration performance thereof is maintained. When the thickness of the separation function layer is 500 $\mu$m or less, satisfactory permeability can be maintained.

<Porous Supporting Layer>

The porous supporting layer imparts mechanical strength to the separation membrane. The pores of the porous supporting layer are not particularly limited in the size and distribution thereof, and the porous supporting layer need not have the ability to separate components having a small molecular size, e.g., ions. Specifically, the porous supporting layer is not limited so long as this layer is of the kind generally called a "porous supporting membrane". For example, the porous supporting layer is a layer which has even and fine pores or a layer having fine pores, the size of which gradually increases from the surface on the side where the separation function layer is to be formed to the other surface. It is preferred to use a porous supporting layer in which the pores in the surface on the side where the separation function layer is to be formed have a projected-area equivalent-circle diameter, as measured from above the surface with an atomic force microscope, electron microscope, or the like, is 1 to 100 nm. It is especially preferred that the pores in that surface should have a projected-area equivalent-circle diameter of 3 to 50 nm, from the standpoints of reactivity in interfacial polymerization and the property of holding the separation function membrane.

The thickness of the porous supporting layer is not particularly limited. However, from the standpoints of the strength of the separation membrane and impartation of a difference in surface level to the separation membrane and from the standpoint of the stability of the shape of the feed-side passage, the thickness of the porous supporting layer is preferably in the range of 20 to 500 $\mu$m, more preferably in the range of 30 to 300 $\mu$m.

The configuration of a porous supporting layer can be examined with a scanning electron microscope, transmission electron microscope, or atomic force microscope. For example, when a porous supporting layer is examined with a scanning electron microscope, the porous supporting membrane is peeled from the substrate (nonwoven fabric) and this film is then cut by a freeze-cutting method to obtain a sample for cross-section examination. This sample is thinly coated with platinum, platinum-palladium, or ruthenium tetrachloride, preferably with ruthenium tetrachloride, and is then examined with a high-resolution field-emission scanning electron microscope (UHR-FE-SEM) at an accelerating voltage of 3-6 kV. As the high-resolution field-emission scanning electron microscope, use can be made of electron microscope Type S-900, manufactured by Hitachi, Ltd., or the like. From the electron photomicrograph obtained, the thickness of the porous supporting layer and the projected-area equivalent-circle diameter of the surface are determined. The thickness and pore diameter of the supporting layer are average values. The thickness of the supporting layer is an average value determined by making a thickness measurement in a cross-section examination along a direction perpendicular to the thickness direction at intervals of 20 $\mu$m and averaging the values thus measured at 20 points. The pore diameter is an average value determined by counting 200 pores and averaging the projected-area equivalent-circle diameters of the pores.

Preferred as the material of the porous supporting layer are polysulfones, cellulose acetate, poly(vinyl chloride), and epoxy resins or mixtures or laminates thereof. Polysulfones are preferred as a material which is highly stable chemically, mechanically, and thermally and which facilitates pore diameter regulation.

As stated above, there are cases where a layer having the same configuration as the porous supporting layer explained in this section is disposed as a separation function layer on a substrate. In this case, the pore diameter, etc. of this porous supporting layer are set according to the substance to be separated.

<Substrate>

Next, the substrate to be used may be a sheet of nonwoven fabric, which is a fibrous substrate, from the standpoints of imparting moderate mechanical strength to the separation membrane while maintaining the separation performance and permeability of the separation membrane and of regulating the difference in surface level of the separation membrane.

As the nonwoven fabric, use may be made of nonwoven fabric including a polyolefin, polyester, cellulose, or the like. However, from the standpoints of imparting a difference in surface level to the separation membrane and of shape retentivity, nonwoven fabric including a polyolefin or polyester is preferred. It is also possible to use nonwoven fabric including a mixture of a plurality of materials.

As the substrate, a long-fiber nonwoven fabric or short-fiber nonwoven fabric can be advantageously used. It is preferred to use a substrate which satisfies the following and other requirements: when a solution of a high-molecular polymer is poured onto the substrate, the solution of a high-molecular polymer is less apt to infiltrate and reach the back surface (permeate side) of the substrate; the porous supporting layer is less apt to peel off therefrom; and the substrate is less apt to cause defects, such as, for example, separation membrane unevenness and pinholes, due to the fluffing of the substrate, etc. Consequently, it is especially preferred to use a long-fiber nonwoven fabric as the substrate. For example, long-fiber nonwoven fabric configured of thermoplastic continuous filaments is used as the substrate. In view of the fact that a tension is imposed in the machine direction in the continuous production of a separation membrane, it is preferred that long-fiber nonwoven fabric, which has excellent dimensional stability, should be used as the substrate. Especially in the separation membrane having the configuration (i), long-fiber nonwoven fabric is preferred from the standpoints of strength and cost, and polyester long-fiber nonwoven fabric is preferred from the standpoint of substrate formability.

It is preferred, from the standpoints of formability and strength, that in the long-fiber nonwoven fabric, the fibers present in a surface layer on the side opposite to the porous supporting layer should have a higher degree of longitudinal orientation than the fibers present in a surface layer on the side facing the porous supporting layer. This structure enables the separation membrane to retain strength and to be more effectively inhibited from suffering membrane breakage, etc. Furthermore, due to that structure, a laminate including the porous supporting layer and the substrate has improved formability to enable the separation membrane to have recesses and protrusions of a stable shape. More specifically, it is preferred that the degree of orientation of the fibers in that surface layer of the long-fiber nonwoven fabric which is located on the side opposite to the porous supporting layer should be 0° to 25°, and that the difference in the degree of orientation between those fibers and the fibers present in the surface layer on the side facing the porous supporting layer should be 10° to 90°.

Steps for producing the separation membrane and steps for producing the element include steps which involve heating. The heating results in a phenomenon in which the porous supporting layer or the separation function layer contracts. Especially in continuous membrane production, the contraction is remarkable in the width direction along which no tension is imposed. Since contraction poses problems concerning dimensional stability, etc., it is desirable to use a substrate having a low degree of thermal dimensional change. In the nonwoven fabric, when the difference between the degree of fiber orientation in the surface layer on the side opposite to the porous supporting layer and the degree of fiber orientation in the surface layer on the side facing the porous supporting layer is 10° to 90°, the thermal width-direction change  can be diminished. Such differences in the degree of fiber orientation are hence preferred.

Here, the degree of fiber orientation is an index to the directions of the fibers of the nonwoven-fabric substrate which constitutes the porous supporting layer. When the machine direction in the case of continuous membrane production is taken as 0° and the direction perpendicular to the machine direction, i.e., the width direction of the nonwoven-fabric substrate, is taken as 90°, then the term "degree of fiber orientation" means the average angle of the fibers constituting the nonwoven-fabric substrate. Consequently, the closer to 0° the degree of fiber orientation, the more the fibers have been oriented longitudinally. The closer to 90° the degree of orientation, the more the fibers have been oriented transversely.

The degree of fiber orientation is determined in the following manner. Ten small-piece samples are randomly cut out of the nonwoven fabric, and the surfaces of these samples are photographed with a scanning electron microscope at a magnification of 100 to 1,000 diameters. Ten fiber images are selected from the fiber images of each sample. With respect to a total of 100 fibers, the angle of each fiber image is measured, while taking the longitudinal direction of the nonwoven fabric (lengthwise direction; machine direction) as 0° and the width direction of the nonwoven fabric (transverse direction) as 90°. The average of these values is rounded off to the nearest whole number to determine the degree of fiber orientation.

Each of the layers included in the separation membrane, i.e., the substrate, porous supporting layer, separation function layer, etc., can contain additives such as, for example, a colorant, antistatic agent, and plasticizer, in a proportion of 5% by  weight or less, or 2% by weight or less, or 1% by weight or less, besides the components described above.

<Recesses and Protrusions>

In this embodiment, a plurality of recesses and protrusions which have a difference in surface level of 100 to 2,000 $\mu$m have been disposed on at least one surface of the separation membrane. By forming such multiple recesses and protrusions on the surface of the separation membrane, a feed-side passage is stably formed. Thus, a separation membrane which is excellent in terms of separation performance and permeability is rendered possible. It is preferred that the difference in surface level thereof should be 200 $\mu$m or larger. Meanwhile, the difference in surface level thereof is preferably 1,500 $\mu$m or less, more preferably 1,000 $\mu$m or less.

The expressions "a difference in surface level has been formed" and "recesses and protrusions have been disposed" have a meaning which includes that grooves, recesses, and/or projections, etc. have been formed on or in the separation membrane. Incidentally, the sizes, shapes, etc. of the grooves, recesses, and/or projections, etc. in the longitudinal section and cross-section can be changed, and should not be construed as being limited to specific ones.

For example, the recesses and protrusions may have a shape capable of forming a feed-side passage or a permeate-side passage. Namely, from the standpoint of forming a feed-side passage, the recesses and protrusions may be a continuous grooved structure which has been formed on the feed-side surface of the separation membrane and which is capable of efficiently supplying a raw fluid to substantially the whole separation membrane. From the standpoint of forming a permeate-side passage, the recesses and protrusions may be a continuous grooved structure which has been formed on the permeate-side surface of the separation membrane and which, when the separation membrane has been incorporated into an element, can collect the permeated fluid in the water collection tube.

The term "recess and protrusion" means the region lying between the peaks of two adjacent protrusions present on one of the surfaces of the separation membrane in a cross-section of the separation membrane. Namely, in at least one cross-section of the separation membrane, one of the surfaces of the separation membrane includes both three or more adjacent protrusions and recesses disposed between these protrusions. In the case, for example, where a protrusion has a flat top, the center of the flat portion in a cross-section thereof is regarded as the "peak".

In the case of a separation membrane in which grooves have been formed in a mesh pattern arrangement in one surface thereof, the number of grooves is "1" in a plan view thereof but there are a plurality of recesses and protrusions in a cross-section thereof. Also in the case of a separation membrane in which protrusions have been disposed in a mesh pattern arrangement on one surface thereof, the number of protrusions is "1" in a plan view thereof but there are a plurality of protrusions in a cross-section thereof. These structures are also included in the configuration in which "a plurality of recesses and protrusions have been formed".

A difference in surface level is formed by a structure which has a cross-section having recesses and protrusions, as in, for example, the separation membrane 3 a shown in Fig. 7. Namely, in the separation membrane 3a, the protrusions of the feed-side surface 34 correspond to recesses of the permeate-side surface 35, and the recesses of the feed-side surface 34 correspond to protrusions of the permeate-side surface 35. In the separation membrane 3a, the difference in surface level of the feed-side surface 34 is substantially equal to the difference in surface level of the permeate-side surface 35. Consequently, these differences in surface level are inclusively expressed by D1 in Fig. 7.

All separation membranes contained in one separation membrane element may have the difference in surface level described above, or only some of the separation membranes may have the difference in surface level described above. Furthermore, each separation membrane may have the difference in surface level formed over the whole surface thereof, or may have both a region where there is no difference in surface level and a region where the difference in surface level has been formed.

The difference in surface level of a separation membrane can be measured using a commercial shape measurement system. For example, the difference in surface level can be determined by examining a cross-section of the separation membrane with a laser microscope. Alternatively, the difference in surface level can be determined by examining the surface of the separation membrane with high-precision shape measurement system KS-1100, manufactured by Keyence Corp. A measurement is made on sites where there is a difference in surface level, and the sum of the measured values of height is divided by the number of all sites where the measurement was made. Thus, the difference in surface level can be determined. The difference of surface level is not limited so long as the difference measured by either of the measuring methods shown herein is within that range. A specific measuring method will be explained in the Examples.

The pitch of the difference in surface level is preferably 0.1 to 30 mm, more preferably 0.5 to 15 mm. The term "pitch" means the horizontal distance between the highest point in a high portion within at least one surface of the separation membrane where differences in surface level are present and the highest point in the adjacent high portion.

The shape of the recesses and protrusions (i.e., the shape of the recesses or the shape of the protrusions) is not particularly limited. It is, however, important to reduce the flow resistance of the passage and to render the passage stable when a fluid is supplied to and passed through the separation membrane element. From these standpoints, the shape of each recess or protrusion, when examined from the feed side, may be an ellipse, circle, elongated circle, trapezoid, triangle, rectangle, square, parallelogram, rhombus, or irregular shape. With respect to the shape of the recesses or protrusions in a cross-section perpendicular to the separation membrane, when the feed side and the permeate side are taken as the upper side and the lower side, respectively, then the recesses or protrusions may have been formed so as to have a constant width from the upper side to the lower side, or may have been formed so that the width thereof becomes larger or smaller from the upper side to the lower side.

The proportion of the area of the protrusions present on the feed-side surface of the separation membrane to the area of the surface observed from above the feed-side surface (two-dimensional area) is preferably 5 to 80%, and is especially preferably 10 to 60% from the standpoints of flow resistance and passage stability. The term "area of the protrusions" means the projected area M1 of those portions of the feed-side surface of the separation membrane which lie above the center line in terms of surface level difference (e.g., the dot-and-dash line in Fig. 7), on a plane parallel with the feed-side surface of the separation membrane. Namely, it is preferred that the ratio of the area M1 to the projected area M2 of the surface of the separation membrane (M1/M2) should be within the range shown above.

Incidentally, the separation membrane in which a difference in surface level has been formed on the permeate-side surface is suitable for use in a separation membrane element in which the permeate-side spacer has been omitted. Meanwhile, the separation membrane in which a difference in surface level has been formed on the feed-side surface is suitable for use in a separation membrane element in which the feed-side spacer has been omitted. Furthermore, the separation membrane in which a difference in surface level has been formed on both surfaces is suitable for use in a separation membrane element in which both the permeate-side spacer and the feed-side spacer have been omitted.

As a matter of course, the configurations of the separation membranes 10 and 14 shown in Fig. 8 and Fig. 9 can be applied as the separation membrane 3a shown in Fig. 7.

Incidentally, the configurations and shapes described in different sections may be combined, the resultant combination being within the technical range of the invention.

<Strip-Form Ends>

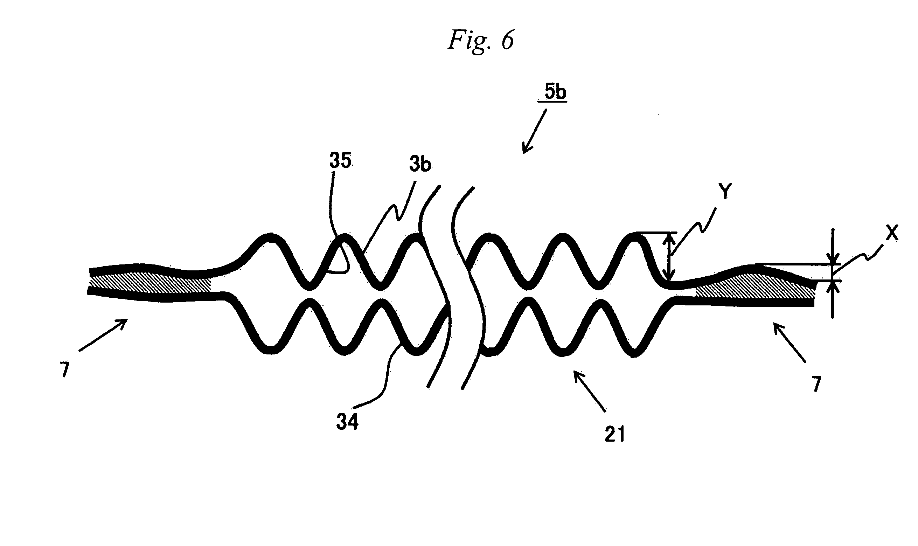

As shown in Fig. 6, separation membranes having a difference in surface level are stacked and bonded to each other to thereby form an envelope-shaped membrane 5b. The envelope-shaped membrane 5b has a strip-form region disposed in each of ends thereof. This strip-form region is referred to as strip-form end and expressed by numeral 7.

The strip-form end 7 is an area of the separation membrane surface where substantially no surface level difference has been formed. The presence of such ends enhance the adhesion of the separation membranes to each other. For example, the surface of each separation membrane has an average difference in surface level X of 50 μm or less. By regulating the average difference in surface level X of the separation membrane surface to 50 μm or less in the strip-form ends 7, which are portions to which an adhesive is to be applied, adhesive application unevenness and bonding failures can be eliminated and the adhesion of the separation membranes to each other can be enhanced.

The width of each strip-form end can be suitably changed in the range of, for example, 10 to 100 mm in accordance with the amount of an adhesive to be applied. So long as the width thereof is within this range, it is possible to ensure feed-side and permeate-side passages between the two separation membranes having a difference in surface level.

The separation membrane surface other than the strip-form ends, i.e., the rugged region 21, has an average difference in surface level Y of preferably 100 μm or larger, more preferably 200 μm or larger. The average difference in surface level Y thereof is preferably 2,000 μm or less, more preferably 1,000 μm or less. By regulating the average difference in surface level Y thereof so as to be 100 μm or larger, the feed-side or permeate-side passage of the spiral type separation membrane element 1b or separation membrane element 1c can be stably formed to enhance the separation performance and permeability as stated above. By regulating the average difference in surface level Y thereof so as to be 2,000 μm or less, the membrane loading per element can be heightened.

II. Feed-Side Spacer

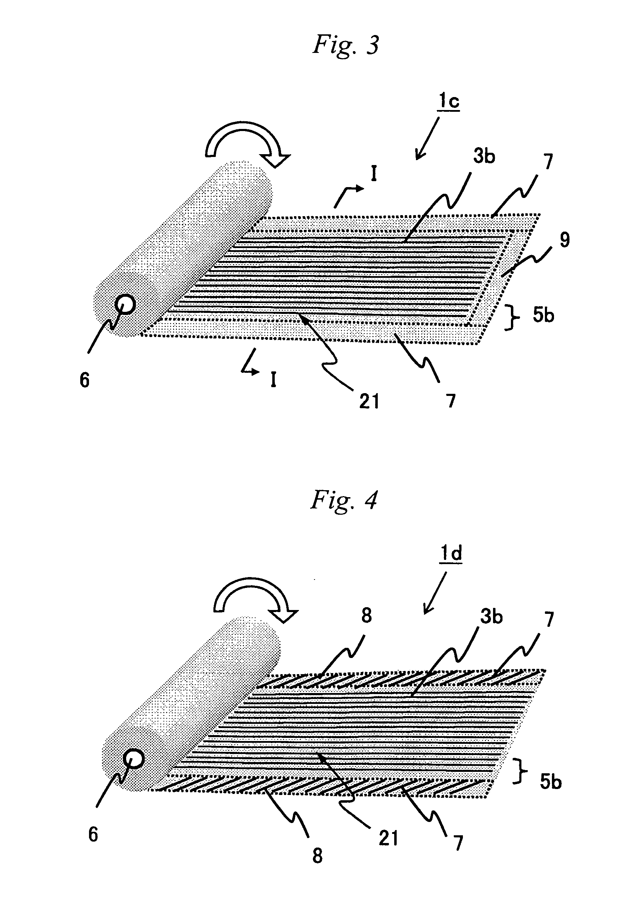

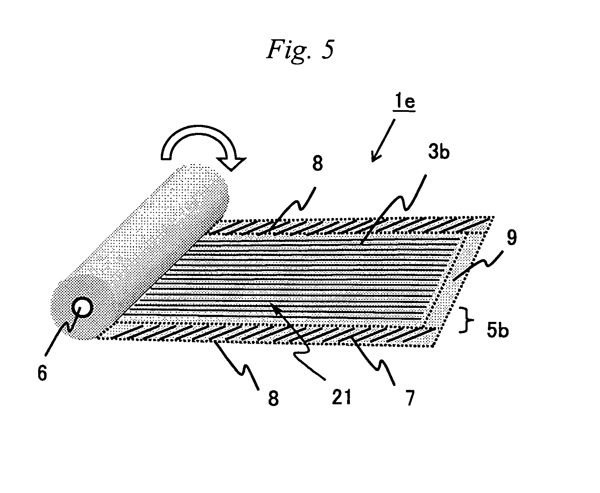

As shown in Fig. 4 and Fig. 5, a feed-side spacer 8 is disposed in the strip-form ends described above. As a result, the feed efficiency of raw-fluid to the feed-side surface of the separation membrane can be further heightened.

The feed-side spacer 8 is a resinous object disposed by thermal fusion bonding or an arrangement of a plurality of such resinous objects. Since the spacer has been disposed by thermal fusion bonding, the feed-side spacer 8 has an exceedingly high degree of freedom of shape. Consequently, the shape of the spacer can be varied in accordance with various conditions.

For example, the feed-side spacer 8 may have a continuous shape or have an incontinuous shape. However, from the standpoint of reducing raw-fluid flow resistance, it is preferred that the feed-side spacer 8 should have an incontinuous shape.

The term "continuous" means that the image of the spacer projected on the plane of the separation membrane has a continuous shape. Examples of members having such a shape include woven fabric, knitted fabric (e.g., nets), nonwoven fabric, and porous materials (e.g., porous films).

The term "incontinuous" means that the image projected on the plane of the separation membrane in the strip-form ends has an incontinuous shape. Examples of the incontinuous shape include a configuration in which a plurality of resinous objects have been disposed on the separation membrane so as to leave a space therebetween. In other words, the term "incontinuous" means that resinous objects have been disposed so that adjacent resinous objects are apart from each other on the separation membrane to such a degree that the permeated fluid can flow through the space between the resinous objects.

The shape of the individual resinous objects is selected so as to reduce the flow resistance of the feed-side passage and stabilize the feed-side passage.

The shape of the individual resinous objects may be the shape of a grain, line, hemisphere, column (including cylinder, prism, etc.), wall, etc. The arrangement of a plurality of line- or wall-shaped spacers disposed on one separation membrane is not limited so long as these spacers have been disposed so as not to cross each other. For example, the spacers may have been disposed parallel with each other.

Furthermore, the individual resinous objects may have the shape of, for example, a straight line, curve, ellipse (including complete circle and elongated circle), or polygon (triangle, rectangle, square, parallelogram, rhombus, or trapezoid) or an irregular shape, etc., in terms of plane-direction shape.

In a cross-section perpendicular to the plane direction of the separation membrane, the spacer 4 (and the resinous objects included therein) can have, for example, an ellipse, circle, elongated circle, trapezoid, triangle, rectangle, square, parallelogram, rhombus, or irregular shape. Moreover, in a cross-section perpendicular to the plane direction of the separation membrane, the feed-side spacer may have any of a shape in which the width becomes wider from the upper part toward the lower part of the spacer (i.e., from the thickness-direction peak of the feed-side spacer toward the feed-side surface of the separation membrane), a shape in which the width becomes smaller from the upper part toward the lower part of the spacer, and a shape in which the width is constant across the cross-section.

The height of the feed-side spacer 8 (the difference in surface level between the feed-side spacer 8 and the feed-side surface of the separation membrane) is preferably 80 $\mu$m or more, more preferably 100 $\mu$m or more. By regulating the height of the spacer 8 to 80 $\mu$m or more, the flow resistance can be reduced. Meanwhile, the height of the spacer 8 is preferably 2,000 $\mu$m or less, and is more preferably not more than, for example, 1,500 $\mu$m or 1,000 $\mu$m. By regulating the height of the spacer 8 to 2,000 $\mu$m or less, the membrane area per element can be increased.

In the case where the individual resinous objects have the shape of a line, it is preferred that the disposition of the resinous objects should be in a striped-pattern arrangement, from the standpoints of facilitating the production and stably forming the feed-side passage. In the striped pattern, line-shaped resinous objects are disposed so as not to cross each other. The term "line-shaped" means that the shape may be either the shape of a straight line or the shape of a curve. The width of the line-shaped resinous objects is preferably 0.2 mm or larger, more preferably 0.5 mm or larger. Meanwhile, the width of the line-shaped resinous objects is preferably 10 mm or less, more preferably 3 mm or less. The dimension of the space between adjacent resinous objects can be selected from the range of one-tenth to 50 times the width of each resinous object.

In the case where the individual resinous objects have the shape of a dot, the diameter of the dot-shaped resinous objects is preferably 0.1 mm or larger, more preferably 0.5 mm or larger. Meanwhile, the diameter of these resinous objects is preferably 5.0 mm or less, and more specifically may be 1.0 mm or less. Examples of patterns of the arrangement of dot-shaped resinous objects include a zigzag pattern and a lattice pattern. The dimension of the space between the resinous objects is preferably 0.2 mm or larger, more preferably 1.0 mm or larger. Meanwhile, the dimension of the space between the resinous objects is preferably 20.0 mm or less, more preferably 15.0 mm or less.

It is preferred that the ratio of the projected area of the feed-side spacer 4 to the feed-side surface 34 in the strip-form ends 7 should be 0.05 or higher. Thus, a passage can be formed more reliably. Meanwhile, the ratio of the projected area thereof is preferably less than 0.2. By thus regulating the ratio, not only raw-fluid resistance can be reduced to attain a low pressure loss but also an effective membrane area can be ensured.

The ratio of the projected area of the feed-side spacer disposed in ends is the proportion of that area of the feed-side spacer disposed within the strip-form ends 7 which is projected on a plane parallel with the plane direction of the separation membrane to that area of the strip-form ends which is projected on that plane. For example, in Fig. 4 and Fig. 5, which will be described later, the term "projected-area ratio of the feed-side spacer" means the projected-area ratio of the feed-side spacer 8 to the strip-form ends 7 disposed respectively on both ends in terms of the longitudinal direction of the perforated water collection tube.

The width, diameter, interval, surface level difference, etc. of the feed-side spacer 8 and those of the resinous material included therein can be measured using a commercial shape measurement system or the like. For example, the difference in surface level can be determined through an examination of a cross-section with a laser microscope, an examination with high-precision shape measurement system KS-1100, manufactured by Keyence Corp., etc. A measurement is made on any sites where there is a difference in surface level, and the sum of the measured values thereof is divided by the number of all sites where the measurement was made. Thus, the difference in surface level can be determined. Incidentally, the cross-sectional shape of the feed-side spacer and the surface shape thereof observed when the spacer is viewed from above the membrane are not particularly limited so long as the desired effects of the spiral type separation membrane element are not lessened.

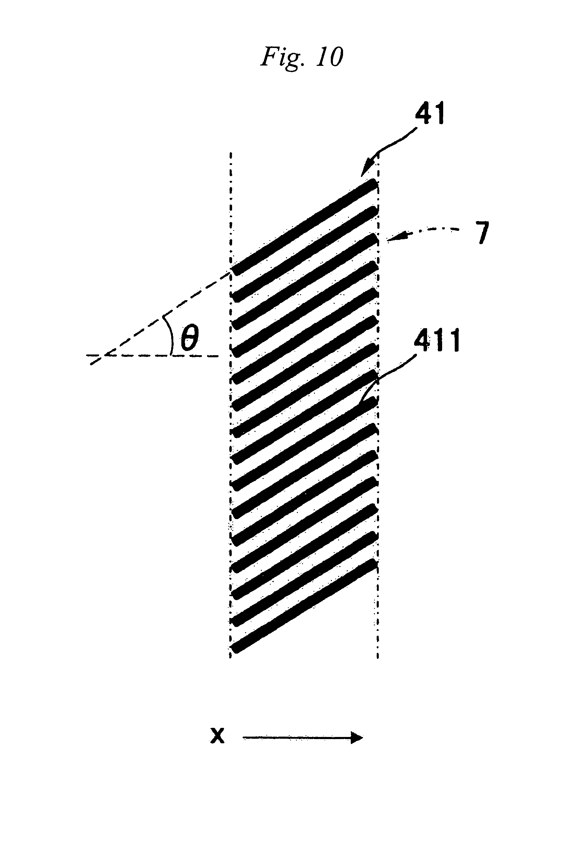

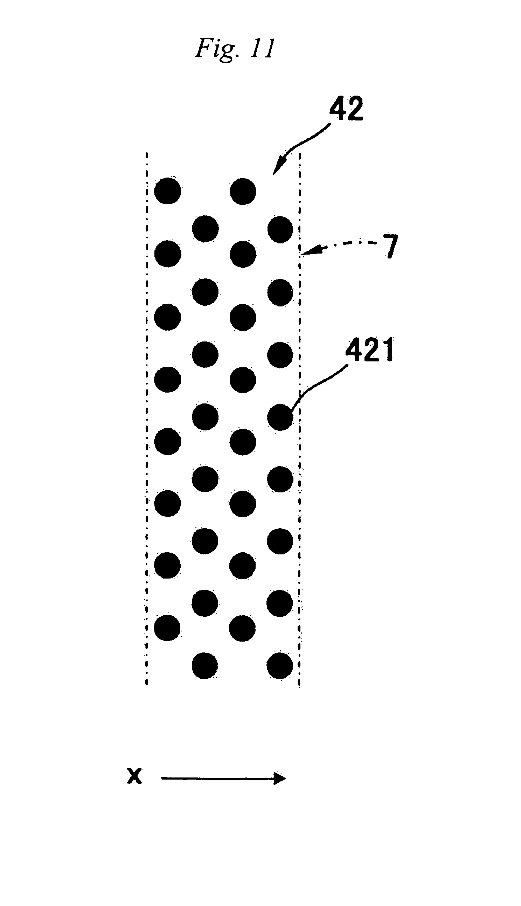

The feed-side spacers 41 and 42 shown in fig. 10 and Fig. 11 are applicable as the feed-side spacer 8. The feed-side spacer 41 shown in Fig. 10 includes a plurality of resinous objects 411, and the resinous objects 411 each have the shape of a straight line and extend obliquely to the longitudinal direction of the collection tube 2 (i.e., the x-axis direction in the figure). In particular, the resinous objects 411 in Fig. 10 have been disposed parallel with each other. The term "obliquely" means that parallelism and orthogonality are excluded. Namely, the angle $\theta$ between the longitudinal direction of the resinous objects 411 and the x-axis direction is 0° or more but less than 90°. Incidentally, the angle $\theta$ indicates an absolute value, and two resinous objects which are symmetric with respect to the x-axis show the same value of angle $\theta$.

Since the angle $\theta$ is less than 90°, the flow of a raw fluid is disturbed. Consequently, concentration polarization is less apt to occur and satisfactory separation performance is rendered possible. Since the angle $\theta$ is larger than 0°, the effect of inhibiting concentration polarization is further heightened. When the angle $\theta$ is 60° or less, the raw-fluid flow resistance is relatively low and the effect of inhibiting concentration polarization can be highly enhanced. From the standpoint of producing a turbulence effect while reducing flow resistance, it is more preferred that the angle $\theta$ should be larger than 15° but not larger than 45°.

In the striped-pattern arrangement, the upstream-side flow material and the downstream-side flow material may be parallel with each other or may be in a non-parallel state. For example, the upstream-side spacer and the downstream-side spacer may be symmetric with respect to the winding direction, i.e., the longitudinal direction of the separation membrane, or may be asymmetric.

The feed-side spacer 42 shown in Fig. 11 includes a plurality of dot-shaped resinous objects 421. The individual resinous objects 421 each have a circular plane shape, and the resinous objects 421 have been disposed in a zigzag-pattern arrangement.

The separation membranes have been stacked so that the feed-side surfaces thereof face each other. The feed-side spacer may have been disposed so that the resinous objects disposed on the opposed feed-side surfaces overlap each other when the separation membranes are thus stacked.

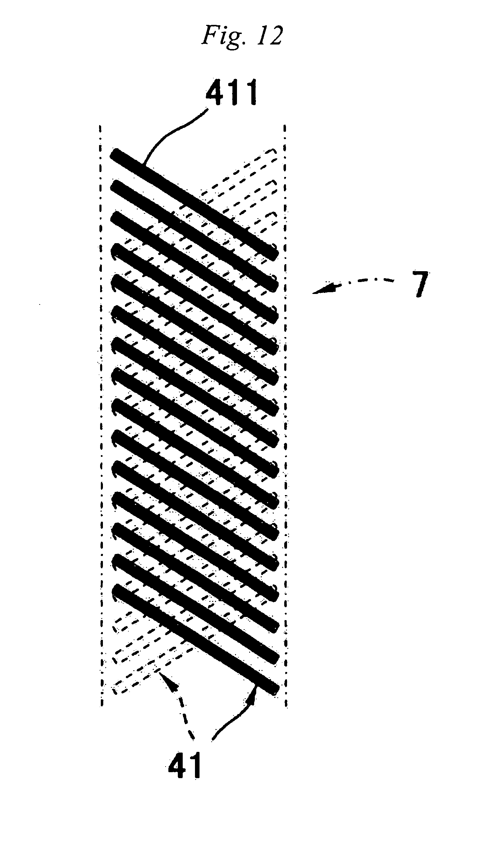

An example of such configurations is shown in Fig. 12, in which the spacers 41 of Fig. 10 overlap each other. In case where the separation membranes partly fall into the spaces between the resinous objects 411, the feed-side passages become narrower. However, since the individual resinous objects 411 overlap so as to cross each other as shown in Fig. 12, such falling can be inhibited.

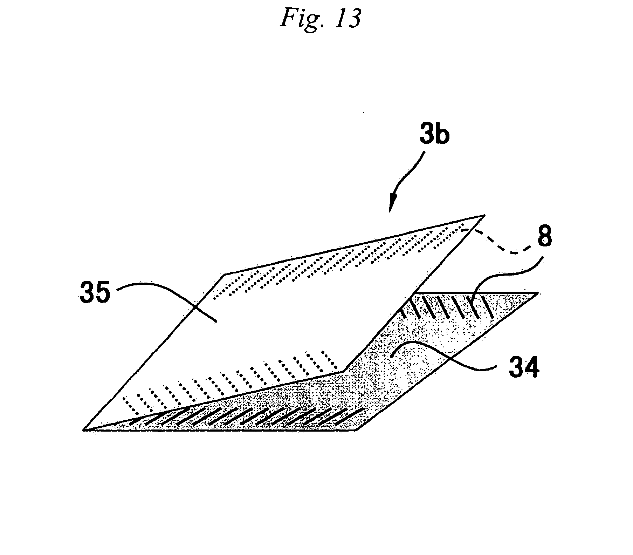

For obtaining such a separation membrane stack, use may be made of a method in which a separation membrane 3b is folded so that the feed-side surface 34 of the separation membrane faces inward, as shown in Fig. 13, or a method in which two separation membranes 3b are laminated so that the feed-side surfaces 34 thereof face each other.

In the case where a separation membrane 3b is folded, it is preferred that no spacer should have been disposed on and around the bend line, from the standpoint of improving the foldability of the separation membrane 3b, although this configuration depends on the rigidity of the resin which constitutes the spacer 41.

It is preferred that the resin which constitutes the feed-side spacers 8, 41, and 42 should be a thermoplastic resin, e.g., a polyolefin, modified polyolefin, polyester, polyamide, urethane, or epoxy resin. Preferred as the resin, especially from the standpoints of processability and cost, are polyolefin resins, such as ethylene/vinyl acetate copolymer resins, and polyester resins. Especially preferred are polyolefin resins which can be processed at 100°C or lower, such as, for example, ethylene/vinyl acetate copolymer resins, and polyester resins.

III. Permeate-Side Spacer

The permeate-side spacer may be any material so long as the material has been configured so that the permeated fluid can reach the perforated water collection tube. The shape, size, constituent material, etc. thereof should not be construed as being limited to those in specific configurations.

Tricot was mentioned hereinabove as an example of members having a continuous shape which are for use as the permeate-side spacer. A definition of the term "continuous" was given hereinabove. Other examples of members having a continuous shape include woven fabric, knitted fabric (e.g., nets), nonwoven fabric, and porous materials (e.g., porous films).

In place of the permeate-side spacer, incontinuous resinous objects may be applied. A definition of the term "incontinuous" was given hereinabove. Examples of the shape of incontinuous spacers include the shape of dots, grains, lines, hemispheres, columns (including cylinders, prisms, etc.), or walls. The arrangement of a plurality of line- or wall-shaped spacers disposed on one separation membrane is not limited so long as these spacers have been disposed so as not to cross each other. Specifically, the spacers may have been disposed parallel with each other.

The shape of the individual resinous objects which constitute such an incontinuous-shape permeate-side spacer is not particularly limited. It is, however, preferred that the shape of the incontinuous spacer should reduce the flow resistance of the permeated fluid passage and render the passage stable when a raw fluid is supplied to and passed through the separation membrane element. Examples of the plan-view shape of one unit of the incontinuous-shape permeate-side spacer which is viewed from the direction perpendicular to the permeate-side surface of the separation membrane include the shapes of an ellipse, circle, elongated circle, trapezoid, triangle, rectangle, square, parallelogram, and rhombus and irregular shapes. Moreover, in a cross-section perpendicular to the plane direction of the separation membrane, the permeate-side spacer may have any of a shape in which the width becomes wider from the upper part toward the lower part of the spacer (i.e., from the thickness-direction peak of the permeate-side spacer toward the separation membrane on which the permeate-side spacer has been disposed), a shape in which the width becomes smaller from the upper part toward the lower part of the spacer, and a shape in which the width is constant across the cross-section.

The thickness of the permeate-side spacer in the separation membrane element is preferably 30 to 1,000 $\mu$m, more preferably 50 to 700 $\mu$m, even more preferably 50 to 500 $\mu$m. So long as the thickness thereof is within any of these ranges, a stable permeated fluid passage can be ensured.

In the case where an incontinuous-shape permeate-side spacer is disposed, for example, by hot-melt processing, the thickness of the permeate-side spacer can be regulated at will by changing the processing temperature and the hot-melt resin to be selected, so that the required separation properties and permeability can be satisfied.

The thickness of the permeate-side spacer can be measured using a commercial shape measurement system or the like. For example, the thickness thereof can be determined through a thickness measurement on a cross-section with a laser microscope or through an examination with high-precision shape measurement system KS-1100, manufactured by Keyence Corp., or the like. A measurement is made on any sites where the permeate-side spacer is present, and the sum of the thickness values is divided by the number of all sites where the measurement was made. Thus, the thickness thereof can be determined.

IV. Separation Membrane Element

The members explained above can be applied to a separation membrane element. Embodiments of the separation membrane element are explained below by reference to drawings.

1. First Embodiment

Fig. 2 is a partly developed slant view which shows an example of the separation membrane element of the invention.

As Fig. 2 shows, the separation membrane element 1b is a so-called spiral type separation membrane element. The separation membrane element 1b includes a perforated water collection tube 6 and separation membranes 3b wound around the periphery of the perforated water collection tube 6. With respect to members which are not especially explained here, e.g., end plates, the same configuration as in Fig. 1 may be applied.

The separation membranes 3b are wound around the periphery of the perforated water collection tube 6 to thereby form a cylindrical spiral. As the separation membranes 3b, separation membranes equipped with the recesses and protrusions described above are applicable. Namely, the separation membranes 3b each are equipped on a surface thereof with a rugged region 21 having a difference in surface level of 100 to 2,000 $\mu$m. The separation membranes 3b have been stacked and bonded to each other to thereby form a rectangular envelope-shaped membrane 5b. This envelope-shaped membrane 5b has strip-form regions where the separation membranes have an average difference in surface level of 50 $\mu$m or less, in both ends thereof in terms of the longitudinal direction of the perforated water collection tube 6. These regions are referred to as "strip-form ends" and expressed by numeral 7. Namely, the rugged region 21 lies between two strip-form ends 7 in the longitudinal direction of the water collection tube.

In particular, in this embodiment, the separation membranes 3b are laminated to each other to thereby form the rectangular envelope-shaped membrane 5b. This envelope-shaped membrane 5b is open at one edge of the rectangle, and has been bonded to the perforated water collection tube 6 so that this opening faces the outer peripheral surface of the perforated water collection tube 6. The envelope-shaped membrane 5b bonded to the perforated water collection tube 6 is wound around the periphery of the perforated water collection tube 6 to thereby form a spiral.

The perforated water collection tube 6 is a tube which is hollow inside, and has a large number of holes in the surface thereof which communicate with the inside. Usable as the material thereof are various materials including rigid plastics such as PVC and ABS and metals such as stainless steel. Basically, one perforated water collection tube is disposed per separation membrane element.

In the separation membrane element, when a raw fluid is fed from one of both ends in terms of the longitudinal direction of the perforated water collection tube 6, the permeated fluid passes through the perforated water collection tube 6 and flows out from the element through the other end. Meanwhile, the concentrate passes through the feed-side passage and flows out from the element through that other end. The end to which a raw fluid is supplied is referred to as "feed-side end" or "upstream end", while the end through which the permeated fluid and the concentrate flow out is referred to as "outlet-side end" or "downstream end".

2. Second Embodiment

Fig. 3 is a partly developed slant view which shows another example of the separation membrane element. The members and element portions which have been explained by reference to Fig. 2, etc. are designated by the same numerals or signs, and explanations thereon may be omitted.

As Fig. 3 shows, in all the strip-form ends, other than the opening-side end, of the envelope-shaped membrane 5b in the separation membrane element 1c, the separation membranes have an average difference in surface level of 50 $\mu$m or less. Namely, the separation membranes 3b each are equipped with strip-form ends 7 and 9 along the outer edges of the separation membrane 3b other than the edge close to the water collection tube 6. Except for this, the element 1c has the same configuration as the first embodiment.

3. Third Embodiment

Fig. 4 is a partly developed slant view which shows still another example of the separation membrane element.

As Fig. 4 shows, the separation membrane element 1d is equipped with a feed-side spacer 8 disposed in strip-form ends 7 by thermal fusion bonding. Except for this, the element 1d has the same configuration as the first embodiment. In this embodiment, a spacer 8 is disposed at both the raw-fluid feed-side end and the concentrate outlet-side end. However, the invention is not limited to this configuration. For example, the element may have a configuration in which a spacer 8 has been disposed only in the strip-form end located on the raw-fluid feed side and has not been disposed on the concentrate outlet side.

### 4. Fourth Embodiment

Fig. 5 is a partly developed slant view which shows a further example of the separation membrane element.
As Fig. 5 shows, the separation membrane element 1e is equipped with a feed-side spacer 8 disposed by thermal fusion bonding in strip-form ends 7 lying in both ends in terms of the longitudinal direction of the water collection tube. Except for this, the element 1e has the same configuration as the second embodiment. The configuration shown in Fig. 5 may be modified so that the spacer 8 has been disposed only in the strip-form end located on the raw-fluid feed side and has not been disposed on the concentrate outlet side.

### 5. Other Embodiments

The feed-side spacer may be any material with which a passage for a raw fluid and for the concentrate can be ensured, and the shape, thickness, composition, etc. thereof should not be construed as being limited to those in the specific configurations. For example, a net which has been conventionally used may be applied as the feed-side spacer.
The permeate-side spacer may be any material with which a passage for a permeated fluid can be ensured, and the shape, thickness, composition, etc. thereof should not be construed as being limited to those in the specific configurations. For example, tricot which has been conventionally used may be applied as the permeate-side spacer.
The configurations and shapes described in different sections may be combined, the resultant combination being within the technical range of the invention.

### V. Process for Production of the Separation Membrane Element

### 1. Production of Separation Membrane

<Formation of Porous Supporting Layer according to (i) above and of Separation function layer according to (ii) above>

In the following explanation, the porous supporting layer in the separation membrane (i) and the separation function layer in the separation membrane (ii) are inclusively referred to as "porous resin layer".
As a specific example of methods for forming the porous resin layer, an explanation is given on a method including a step in which a resin is dissolved in a good solvent, a step in which the resin solution obtained is cast on a substrate, and a step in which this resin solution is brought into contact with a non-solvent. In this method, a coating film of a dope which contains the resin described above and a solvent is first formed on a surface of a substrate (e.g., nonwoven fabric) and the dope is infiltrate into the substrate. Thereafter, only the coating-film-side surface of this coated substrate is brought into contact with a coagulating bath which contains a non-solvent. Thus, the resin is coagulated to form a porous resin layer, as a separation function layer, on the surface of the substrate. It is preferred that the temperature of the dope should be selected usually from the range of 0 to 120°C, from the standpoint of film-forming properties.
The kind of resin is as stated hereinabove.
The solvent is for dissolving the resin therein. The solvent acts on the resin and a pore-forming agent to facilitate the formation of a porous resin layer by the resin and agent. As the solvent, use can be made ofN-methylpyrrolidinone (NMP), N,N-dimethylacetamide (DMAc), N,N-dimethylformamide (DMF), dimethyl sulfoxide (DMSO), acetone, methyl ethyl ketone, or the like. Preferred of these are NMP, DMAc, DMF, and DMSO, in which the resin has high solubility.
A pore-forming agent can be added to the dope. The pore-forming agent is an agent which has the function of being extracted upon immersion in a coagulating bath and thereby rendering the resin layer porous. It is preferred that the pore-forming agent should be a substance which has high solubility in the coagulating bath. For example, an inorganic salt such as calcium chloride or calcium carbonate can be used. The pore-forming agent may be selected also from: polyoxyalkylenes such as polyethylene glycol and polypropylene glycol; water-soluble polymers such as poly(vinyl alcohol), poly(vinyl butyral), and poly(acrylic acid); and glycerol.
Furthermore, a non-solvent can be added to the dope. The non-solvent is a liquid in which the resin does not dissolve. The non-solvent functions to control the rate of coagulation of the resin to control the size of the pores. As the non-solvent, use can be made of water or an alcohol such as methanol or ethanol. Preferred of these are water and methanol, from the standpoints of ease of wastewater treatment and cost. A mixture thereof may also be used.
The concentration of the resin in the dope is, for example, 5% by weight or higher, and may be 8 to 40% by weight or 8 to 25% by weight. The concentration of the solvent is, for example, 40 to 95% by weight, and may be 55 to 94.9% by weight or 60 to 90% by weight. Too small resin amounts result in a porous resin layer having reduced strength. Too large amounts thereof may result in a decrease in water permeability. Meanwhile, too small solvent amounts are apt to result in gelation of the dope, and too large amounts thereof may result in a porous resin layer having reduced strength.

Especially when a pore-forming agent and a non-solvent are added, it is preferred that the content of the resin in the dope should be 5 to 40% by weight and that the content of the solvent therein should be 40 to 94.9% by weight. It is preferred that the content of the pore-forming agent in the dope should be 0.1 to 15% by weight. It is more preferred that the content of the pore-forming agent should be 0.5 to 10% by weight. Furthermore, the content of the non-solvent is preferably 0 to 20% by weight, more preferably 0.5 to 15% by weight.

Too low contents of the pore-forming agent may result in a decrease in water permeability, while too high contents thereof may result in a porous resin layer having reduced strength. Moreover, when the amount of the pore-forming agent is excessively large, there are cases where the pore-forming agent partly remains in the porous resin. There are cases where the remaining pore-forming agent dissolves away during use to thereby cause a deterioration in the quality of the permeate or fluctuations in water permeability.

As the coagulating bath, use can be made of a non-solvent or a liquid mixture including a non-solvent and a solvent. The content of the solvent in the coagulating bath is, for example, 40 to 95% by weight, more specifically, 50 to 90% by weight. It is preferred that the coagulating bath should contain a non-solvent in an amount of at least 5% by weight. In case where the content of the solvent is less than 40% by weight, the resin coagulates at an increased rate, resulting in a decrease in pore diameter. In case where the content of the solvent exceeds 95% by weight, the resin is less apt to coagulate and a porous resin layer is less apt to be formed.

The rate of coagulation can be regulated by changing the temperature of the coagulating bath. The temperature of the coagulating bath is, for example, 0 to 100°C or 10 to 80°C.

Methods for bringing only the coating-film-side surface of the coated substrate into contact with the coagulating bath are not particularly limited. For example, use may be made of: a method in which the coated substrate is brought into contact with the surface of the coagulating bath while holding the coated substrate so that the coating-film-side surface thereof faces downward; or a method in which the surface of the coated substrate on the side opposite to the coating-film side is brought into contact with a plate having a smooth surface, e.g., a glass plate or metal plate, and laminated thereto in order to prevent the coagulating bath from coming into the back side, and this coated substrate is immersed in the coagulating bath together with the plate. In the latter method, a coating film of the dope may be formed after the substrate is laminated to a plate, or the substrate may be laminated to a plate after a coating film of the dope is formed on the substrate.

The formation of a coating film of the dope on a substrate may be accomplished by applying the dope to the substrate or by immersing the substrate in the dope. In the case of applying the dope, the dope may be applied to one surface of the substrate or may be applied to both surfaces thereof. In this case, when a porous substrate having a density of 0.7 g/cm$^3$ or less is used, the dope infiltrates moderately into this porous substrate, although the infiltration depends also on the composition of the dope.

The separation membrane produced in the manner described above includes a porous resin layer (i.e., a separation function layer) in which the surface that was contacted with the coagulating bath has an average pore diameter which is at least 2 times the average pore diameter of the other surface. The reason for this is as follows. Since the coagulating bath contains a solvent in an amount of 40 to 95% by weight, the rate of displacement between the dope and the coagulating bath is relatively low. Consequently, in the porous resin layer, hole growth proceeds in the surface which is in contact with the coagulating bath, resulting in a large pore diameter. In contrast, in the opposite surface, since this surface is not in contact with the coagulating bath, holes are formed only by means of the phase separation of the dope, resulting in a relatively small pore diameter. The separation membrane thus obtained, therefore, may be used so that the surface which underwent contact with the coagulating bath is on the raw-liquid side and the other surface is on the permeated side.

A specific method for formation is explained. A given amount of a polysulfone is dissolved in DMF to prepare a polysulfone resin solution (dope) having a given concentration. Subsequently, this dope is applied in an approximately even thickness on a substrate constituted of nonwoven fabric. This coated substrate is placed in the air for a given period to remove the surface solvent. Thereafter, the polysulfone is coagulated in a coagulating bath. In this operation, in the surface and other portions which are in contact with the coagulating bath, the solvent DMF rapidly volatilizes and the coagulation of the polysulfone proceeds rapidly. As a result, fine through-holes are formed from, as nuclei, the portions where the DMF was present.

In the inner part ranging from under the surface toward the substrate, the volatilization of DMF and the coagulation of the polysulfone proceed more slowly than in the surface and, hence, the DMF is apt to gather into large nuclei. Consequently, through-holes having a larger diameter are formed. It is a matter of course that since conditions for the nucleation gradually change as the distance from the surface changes, a layer having a pore diameter distribution in which the pore diameter gradually changes and which includes no clear boundary is formed. The average porosity and the average pore diameter can be controlled by regulating the temperature and polysulfone concentration of the dope to be used in this formation step, the relative humidity of the atmosphere in which the dope is applied, the period from application to immersion in the coagulating liquid, the temperature and composition of the coagulating liquid, etc. With respect to details of the steps described above or conditions which were not especially mentioned, etc., the process can be conducted in accordance with the methods described in, for example, Office of Saline Water Research and Development Progress Report, No. 359 (1968). However, it is possible to change the polymer concentration, solvent temperature, and poor solvent in order to obtain a layer having the desired structure.

<Formation of Separation Function Layer according to (i) above>

The separation function layer as a component of the separation membrane (i) can be produced in the following manner.

A separation function layer including a polyamide as the main component can be formed by the interfacial polycondensation of a polyfunctional amine with a polyfunctional acid halide on a porous supporting layer. It is preferred that at least one compound having a functionality of 3 or higher should be used as the polyfunctional amine and/or the polyfunctional acid halide.

The term "polyfunctional amine" herein means an amine which has at least two primary amino groups and/or secondary amino groups per molecule and in which at least one of these amino groups is a primary amino group.

Examples thereof include aromatic polyfunctional amines such as the phenylenediamine and xylylenediamine in which the two amino groups have been bonded to the benzene ring at ortho, meta, or para positions, 1,3,5-triaminobenzene, 1,2,4-triaminobenzene, 3,5-diaminobenozic acid, 3-aminobenzylamine, and 4-aminobenzylamine, aliphatic amines such as ethylenediamine and propylenediamine, and alicyclic polyfunctional amines such as 1,2-diaminocyclohexane, 1,4-diaminocyclohexane, 4-aminopiperidine, and 4-aminoethylpiperazine.

When the selective separation performance, permeability, and heat resistance of the membrane are taken into account, it is preferred that the polyfunctional amine should be an aromatic polyfunctional amine having 2-4 primary amino groups and/or secondary amino groups per molecule. Suitable for use as such a polyfunctional aromatic amine are m-phenylenediamine, p-phenylenediamine, and 1,3,5-triaminobenzene. More preferred of these is m-phenylenediamine (hereinafter referred to as m-PDA), from the standpoints of availability and handleability.

One polyfunctional amine may be used alone, or two or more polyfunctional amines may be used in combination. In the case where two or more polyfunctional amines are to be used, two or more of the amines shown above may be used in combination, or any of the amines shown above may be used in combination with an amine having at least two secondary amino groups per molecule. Examples of the amine having at least two secondary amino groups per molecule include piperazine and 1,3-bispiperidylpropane.

The term "polyfunctional acid halide" means as acid halide having at least two halogenocarbonyl groups per molecule.

Examples of trifunctional acid halides include trimesoyl chloride, 1,3,5-cyclohexanetricarbonyl trichloride, and 1,2,4-cyclobutanetricarbonyl trichloride. Examples of bifunctional acid halides include aromatic bifunctional acid halides such as biphenyldicarbonyl dichloride, azobenzenedicarbonyl dichloride, terephthaloyl chloride, isophthaloyl chloride, and naphthalenedicarbonyl chloride, aliphatic bifunctional acid halides such as adipoyl chloride and sebacoyl chloride, and alicyclic bifunctional acid halides such as cyclopentanedicarbonyl dichloride, cyclohexanedicarbonyl dichloride, and tetrahydrofurandicarbonyl dichloride.

When reactivity with the polyfunctional amine is taken into account, it is preferred that the polyfunctional acid halide should be a polyfunctional acid chloride. When the selective separation performance and heat resistance of the membrane are taken into account, it is preferred that the polyfunctional acid halide should be a polyfunctional aromatic acid chloride having 2-4 chlorocarbonyl groups per molecule. Especially preferred is trimesoyl chloride from the standpoints of availability and handleability.

These polyfunctional acid halides may be used alone, or two or more thereof may be simultaneously used.

A bifunctional acid halide and a trifunctional halide can be used as the polyfunctional acid halides. From the standpoint of enabling the separation membrane to retain the separation performance, the proportion of the bifunctional acid halide to the trifunctional halide, in terms of molar ratio [(number of moles of the bifunctional acid halide)/(number of moles of the trifunctional acid halide)], is preferably 0.05-1.5, more preferably 0.1-1.0.

A specific method for forming a polyamide layer as a separation function layer is explained.

An aqueous solution of a polyfunctional amine is applied to a porous supporting membrane, and the excess portion of the aqueous amine solution is removed with an air-knife or the like. A solution containing a polyfunctional acid halide is applied thereon, and the excess portion of the polyfunctional acid halide is removed with an air-knife or the like.

Thereafter, the monomers may be removed by washing. Furthermore, a chemical treatment with chlorine, an acid, an alkali, nitrous acid, or the like may be given. The chemical treatment may be followed by washing, or washing may be followed by the chemical treatment.

As the solvent of the solution containing a polyfunctional acid halide, an organic solvent is used. The organic solvent desirably is one which is immiscible with water, is capable of dissolving the polyfunctional acid halide therein, and does not destroy the porous resin. An organic solvent which is inert to both the polyfunctional amine compound and the polyfunctional acid halide may be used. Preferred examples thereof include hydrocarbon compounds such as n-hexane, n-octane, and n-decane.

Formation of a separation function layer having an organic-inorganic hybrid structure having, for example, silicon element is explained. As described above, a separation function layer having an organic-inorganic hybrid structure is obtained by at least one reaction selected from between the condensation of the compound (A) and the polymerization of the compound (A) with the compound (B).

First, the compound (A) is explained.

A reactive group having an ethylenically unsaturated group has been directly bonded to the silicon atom. Examples of such a reactive group include vinyl, allyl, methacryloxyethyl, methacryloxypropyl, acryloxyethyl, acryloxypropyl, and styryl. Preferred from the standpoint of polymerizability are methacryloxypropyl, acryloxypropyl, and styryl.

The compound (A) undergoes a process in which the hydrolyzable group directly bonded to the silicon atom changes into, for example, a hydroxyl group, and then undergoes a condensation reaction in which molecules of the resultant silicon compound are combined with each other through siloxane bonds, thereby giving a polymer.

Examples of the hydrolyzable group include functional groups such as alkoxy groups, alkenyloxy groups, carboxy groups, ketoxime groups, aminohydroxy groups, halogen atoms, and isocyanate groups. Preferred alkoxy groups are ones having 1-10 carbon atoms, and more preferred alkoxy groups are ones having 1-2 carbon atoms. Preferred alkenyloxy groups are ones having 2-10 carbon atoms, more preferred alkenyloxy groups are ones having 2-4 carbon atoms, and even more preferred are ones having 3 carbon atoms. Preferred carboxy groups are ones having 2-10 carbon atoms, and a more preferred carboxy group is that having 2 carbon atoms, i.e., acetoxy. Examples of the ketoxime groups include a methyl ethyl ketoxime group, dimethyl ketoxime group, and diethyl ketoxime group. The aminohydroxy groups each are a group in which the amino group has been bonded to the silicon atom through the oxygen atom. Examples thereof include dimethylaminohydroxy, diethylaminohydroxy, and methylethylaminohydroxy. Preferred of the halogen atoms is chlorine atom.

For forming a separation function layer, use can also be made of a silicon compound in which the hydrolyzable group has been partly hydrolyzed to form a silanol structure. Also usable is a condensate formed from two or more silicon compounds by partly hydrolyzing and condensing the hydrolyzable groups to polymerize the silicon compounds to such a degree that no crosslinking occurs.

It is preferred that the silicon compound (A) should be a silicon compound represented by the following general formula (a).

$$Si(R^1)_m(R^2)_n(R^3)_{4-m-n} \qquad (a)$$

($R^1$ represents a reactive group containing an ethylenically unsaturated group. $R^2$ represents any of an alkoxy group, alkenyloxy group, carboxy group, ketoxime group, halogen atom, or isocyanate group. $R^3$ represents H or an alkyl group. Symbols m and n are integers which satisfy $m+n \leq 4$, $m \geq 1$, and $n \geq 1$. With respect to each of $R^1$, $R^2$, and $R^3$, when two or more functional groups are bonded to the silicon atom, these groups may be the same or different.)

Although $R^1$ is a reactive group containing an ethylenically unsaturated group, this reactive group is as described above.

Although $R^2$ is a hydrolyzable group, this group is as described above. The alkyl group represented by $R^3$ preferably has 1-10 carbon atoms, and more preferably has 1-2 carbon atoms.

Preferred as the hydrolyzable group is an alkoxy group, because this group imparts viscosity to the liquid reaction mixture in the formation of the separation function layer.

Examples of such silicon compounds include vinyltrimethoxysilane, vinyltriethyoxysilane, styryltrimethoxysilane, methacryloxypropylmethyldimethoxysilane, methacryloxypropyltrimethoxysilane, methacryloxypropylmethyldiethoxysilane, methacryloxypropyltriethoxysilane, and acryloxypropyltrimethoxysilane.

A silicon compound (C) which has no reactive group having an ethylenically unsaturated group but has a hydrolyzable group can also be used in combination with the compound (A). Although examples of the compound (A) were defined above by general formula (a) wherein $m \geq 1$, examples of the compound (C) include compounds represented by general formula (a) wherein m is zero. Examples of the compound (C) include tetramethoxysilane, tetraethoxysilane, methyltrimethoxysilane, and methyltriethoxysilane.

Next, an explanation is given on the compound (B), which has an ethylenically unsaturated group and is not the compound (A).

The ethylenically unsaturated group has addition polymerizability. Examples of such compounds include ethylene, propylene, methacrylic acid, acrylic acid, styrene, and derivatives thereof.

From the standpoint of enabling the separation membrane to have selective water permeability and enhanced salt rejection when used for the separation of an aqueous solution or the like, it is preferred that this compound should be an alkalisoluble compound having an acid group.

Preferred acid structures are carboxylic acids, phosphonic acids, phosphoric acid, and sulfonic acids. These acid structures each may be present in the form of either the acid, or an ester compound, or a metal salt. These compounds having one or more ethylenically unsaturated groups can contain two or more acids. However, compounds having 1 to 2 acid groups are especially preferred.

Examples of the compounds having a carboxy group, among the compounds having one or more ethylenically unsaturated groups, include maleic acid, maleic anhydride, acrylic acid, methacrylic acid, 2-(hydroxymethyl)acrylic acid, 4-(meth)acryloyloxyethyltrimellitic acid and the corresponding anhydride, 10-methacryloyloxydecylmalonic acid, N-(2-hydroxy-3-methacryloyloxypropyl)-N-phenylglycine, and 4-vinylbenzoic acid.

Examples of the compounds having a phosphono group, among the compounds having one or more ethylenically unsaturated groups, include vinylphosphonic acid, 4-vinylphenylphosphonic acid, 4-vinylbenzylphosphonic acid, 2-methacryloyloxyethylphosphonic acid, 2-methacrylamidoethylphosphonic acid, 4-methacrylamido-4-methylphenylphosphonic acid, 2-[4-(dihydroxyphosphoryl)-2-oxabutyl]acrylic acid, and 2,4,6-trimethylphenyl 2-[2-dihydroxyphosphoryl) ethoxymethyl]acrylate.

Examples of the phosphoric acid ester compounds, among the compounds having one or more ethylenically unsaturated groups, include 2-methacryloyloxypropyl monohydrogen phosphate, 2-methacryloyloxypropyl dihydrogen phosphate, 2-methacryloyloxyethyl monohydrogen phosphate, 2-methacryloyloxyethyl dihydrogen phosphate, 2-methacryloyloxyethyl phenyl monohydrogen phosphate, dipentaerythritol pentamethacryloyloxyphosphate, 10-methacryloyloxydecyl dihydrogen phosphate, dipentaerythritol pentamethacryloyloxyphosphate, mono(1-acryloylpiperidin-4-yl) phosphate, 6-(methacrylamido)hexyl dihydrogen phosphate, and 1,3-bis(N-acryloyl-N-propylamino)propan-2-yl dihydrogen phosphate.

Examples of the compounds having a sulfo group, among the compounds having one or more ethylenically unsaturated groups, include vinylsulfonic acid, 4-vinylphenylsulfonic acid, or 3-(methacrylamido)propylsulfonic acid.

For forming a separation function layer of an organic-inorganic hybrid structure, use is made of a liquid reaction mixture which contains the compound (A), the compound (B), and a polymerization initiator. This liquid reaction mixture is applied to a porous supporting layer. The hydrolyzable group is condensed, and the ethylenically unsaturated groups are polymerized. Thus, these compounds can be converted to a high-molecular compound.

In the case where the compound (A) alone is condensed, crosslinks concentrate on the silicon atoms and, hence, the resultant polymer has a large difference in density between the periphery of the silicon atoms and the portions apart from the silicon atoms. As a result, the resultant separation function layer tends to have unevenness in pore diameter. Meanwhile, when copolymerization of the compound (B) with the compound (A) occurs besides the polymerization and crosslinking of the compound (A) itself, crosslinking sites due to the condensation of the hydrolyzable group and crosslinking sites due to the polymerization of the ethylenically unsaturated groups are formed moderately dispersedly. Such dispersed crosslinking sites render the separation membrane even in pore diameter. As a result, the separation membrane can have a satisfactory balance between water permeability and rejection performance. It is noted that although there are cases where the low-molecular compounds having one or more ethylenically unsaturated groups dissolve away during use of the separation membrane to cause a decrease in membrane performance, such decrease in membrane performance can be inhibited because those compounds have been converted to a high-molecular compound in the separation function layer.

In such a production method, the content of the compound (A), per 100 parts by weight of the solid components contained in the liquid reaction mixture, is preferably 10 parts by weight or more, more preferably 20 to 50 parts by weight. The term "solid components contained in the liquid reaction mixture" herein means those components among all components of the liquid reaction mixture which are other than the volatilizable components, such as the solvent and the water, alcohol, etc. to be yielded by the condensation reaction, and which are finally included as a separation function layer in the composite semipermeable membrane to be obtained. When the content of the compound (A) is sufficient, a sufficient degree of crosslinking is obtained and the possibility of resulting in a trouble, for example, that a component of the separation function layer dissolves away during membrane filtration to reduce the separation performance is diminished.

The content of the compound (B), per 100 parts by weight of the solid components contained in the liquid reaction mixture, is preferably 90 parts by weight or less, more preferably 50 to 80 parts by weight. When the content of the compound (B) is within either of these ranges, a separation function layer having a high degree of crosslinking is obtained and, hence, the separation function layer suffers no dissolution, rendering stable membrane filtration possible.

Next, a method for forming a separation function layer having the organic-inorganic hybrid structure on a porous supporting layer is explained.

Examples of methods for forming the separation function layer include a method in which the step of applying a liquid reaction mixture which contains the compound (A) and the compound (B) is applied, the step of removing the solvent, the step of polymerizing the ethylenically unsaturated groups, and the step of condensing the hydrolyzable group are conducted in this order. In the step of polymerizing the ethylenically unsaturated groups, the condensation of the hydrolyzable group may occur simultaneously.

First, a liquid reaction mixture which contains the compound (A) and the compound (B) is brought into contact with the porous supporting layer which will be described later. This liquid reaction mixture usually is a solution which contains a solvent. This solvent is not particularly limited so long as the solvent does not destroy the porous supporting layer and is capable of dissolving therein the compound (A), the compound (B), and the polymerization initiator which is added according to need. By adding water to this liquid reaction mixture in an amount of 1 to 10 times by mole, preferably 1 to 5 times by mole, the number of moles of the compound (A) together with an inorganic acid or organic acid, the hydrolysis of the compound (A) can be promoted.

Preferred as the solvent of the liquid reaction mixture are water, alcohol-based organic solvents, ether-based organic solvents, ketone-based organic solvents, and mixtures thereof. Examples of the alcohol-based organic solvents include methanol, ethoxymethanol, ethanol, propanol, butanol, amyl alcohol, cyclohexanol, methylcyclohexanol, ethylene glycol monomethyl ether (2-methoxyethanol), ethylene glycol monoacetate, diethylene glycol monomethyl ether, diethylene glycol monoacetate, propylene glycol monoethyl ether, propylene glycol monoacetate, dipropylene glycol monoethyl ether, and methoxybutanol. Examples of the ether-based organic solvents include methylal, diethyl ether, dipropyl ether, dibutyl ether, diamyl ether, diethyl acetal, dihexyl ether, trioxane, and dioxane. Examples of the ketone-based organic solvents include acetone, methyl ethyl ketone, methyl propyl ketone, methyl isobutyl ketone, methyl amyl ketone, methyl cyclohexyl ketone, diethyl ketone, ethyl butyl ketone, trimethylnonanone, acetonitrileacetone, dimethyl oxide, phorone, cyclohexanone, and diacetone alcohol.

The amount of the solvent to be added is preferably 50 parts by weight or larger, more preferably 80 parts by weight or larger, per 100 parts by weight of the solid components contained in the liquid reaction mixture. By regulating the addition amount of the solvent to 50 parts by weight or larger per 100 parts by weight of the solid components, a membrane having satisfactory water permeability is obtained. When the addition amount of the solvent is not larger than that per 100 parts by weight of the solid components, there is an advantage that the membrane is less apt to have defects.

It is preferred that the contact between a porous supporting layer and the liquid reaction mixture should occur evenly and continuously on the porous supporting layer. Specific examples thereof include a method in which the liquid reaction mixture is applied on the porous supporting layer using a coating device such as a spin coater, wire-wound bar, flow coater, die coater, roll coater, or sprayer. Examples thereof further include a method in which the porous supporting layer is immersed in the liquid reaction mixture.

In the case of immersion, the period of contact between the porous supporting layer and the liquid reaction mixture is preferably in the range of 0.5 to 10 minutes, more preferably in the range of 1 to 3 minutes. It is preferred that after the liquid reaction mixture is contacted with the porous supporting layer, the excess liquid should be sufficiently removed so that no droplets remain on the porous supporting layer. By sufficiently removing the excess liquid, it is possible to avoid the trouble that the areas where droplets remain result in defects in the membrane formed and hence in a decrease in membrane performance. For removing the excess liquid, use can be made, for example, of a method in which the porous supporting layer which has been contacted with the liquid reaction mixture is vertically held to thereby cause the excess liquid reaction mixture to flow down naturally or a method in which nitrogen or another gas is blown thereagainst from an air nozzle to forcedly remove the excess liquid (namely, air-knife). It is also possible to dry the membrane surfaces after the removal of the excess liquid to partly remove the solvent of the liquid reaction mixture.

The step of condensing the hydrolyzable group of the silicon is accomplished by conducting a heat treatment after the porous supporting layer has been contacted with the liquid reaction mixture. The heating temperature to be used here is required to be lower than the temperatures at which the porous supporting layer melts to lower the performance of the separation membrane. From the standpoint of causing the condensation reaction to proceed speedily, the coated porous supporting layer usually is heated preferably at 0°C or higher, more preferably at 20°C or higher. Meanwhile, the reaction temperature is preferably 150°C or lower, more preferably 100°C or lower. When the reaction temperature is 0°C or higher, the hydrolysis and the condensation reaction proceed speedily. When the reaction temperature is 150°C or lower, it is easy to control the hydrolysis and the condensation reaction. By adding a catalyst which accelerates the hydrolysis or condensation, the reaction can be made to proceed even at lower temperatures. Furthermore, by selecting heating conditions and humidity conditions so that the separation function layer has pores, the condensation reaction can be suitably carried out.

For polymerizing the ethylenically unsaturated groups of the compounds each having an ethylenically unsaturated group, i.e., the compound (A) and the compound (B), use can be made of a heat treatment, irradiation with electromagnetic waves, irradiation with electron beams, or plasma irradiation. The electromagnetic waves include infrared rays, ultraviolet rays, X rays, y rays, etc. Although an optimal polymerization method may be suitably selected, polymerization with electromagnetic wave irradiation is preferred from the standpoints of running cost, productivity, etc. More preferred of electromagnetic waves, from the standpoint of simplicity, are irradiation with infrared rays and irradiation with ultraviolet rays. When polymerization is actually conducted using infrared rays or ultraviolet rays, the light source for these rays need not selectively emit only the light having that wavelength range, and a light source which emits light containing electromagnetic waves of those wavelength ranges may be used. It is, however, preferred that electromagnetic waves having those wavelength ranges should have a higher intensity than the electromagnetic waves of other wavelength ranges, from the standpoints of a reduction in polymerization time and ease of the control of polymerization conditions, etc.

Electromagnetic waves can be emitted from a halogen lamp, xenon lamp, UV lamp, excimer lamp, metal halide lamp, rare-gas fluorescent lamp, mercury lamp, or the like. The energy of the electromagnetic waves is not particularly limited so long as the polymerization is possible. However, ultraviolet rays having a high efficiency and a short wavelength are highly suitable for thin-film formation. Such ultraviolet rays can be generated by a low-pressure mercury lamp or an excimer laser lamp. The thickness and configuration of the separation function layer can vary considerably depending on the conditions of each polymerization mode. In the case of polymerization with electromagnetic waves, there are cases where the thickness and configuration of the layer vary considerably depending on the wavelength and intensity of the electromagnetic waves, distance to the work being irradiated, and treatment period. It is therefore necessary to suitably optimize these conditions.

It is preferred to add a polymerization initiator, polymerization accelerator, or the like in the formation of the separation function layer for the purpose of heightening the rate of polymerization. The polymerization initiator and the polymerization accelerator are not particularly limited, and may be suitably selected according to the structures of the compounds used, polymerization technique, etc.

Examples of the polymerization initiator are shown below. Examples of initiators for the polymerization with electromagnetic waves include benzoin ethers, dialkyl benzyl ketals, dialkoxyacetophenones, acylphosphine oxides or bisacylphosphine oxides, $\alpha$-diketones (e.g., 9,10-phenanthrenequinone), diacetylquinones, furylquinone, anisylquinone, 4,4'-dichlorobenzylquinone, 4,4'-dialkoxybenzylquinones, and camphorquinone. Examples of initiators for the polymerization with heat include azo compounds (e.g., 2,2'-azobis(isobutyronitrile) (AIBN) or azobis(4-cyanovalerianic acid)), peroxides (e.g., dibenzoyl peroxide, dilauroyl peroxide, tert-butyl peroctanoate, tert-butyl perbenzoate, or di(tert-butyl) peroxide), aromatic diazonium salts, bissulfonium salts, aromatic iodonium salts, aromatic sulfonium salts, potassium persulfate, ammonium persulfate, alkyllithiums, cumylpotassium, sodium naphthalene, and distyryl dianions. Of these, benzopinacols and 2,2'-dialkylbenzopiancols are especially preferred as initiators for radical polymerization.

A peroxide and an $\alpha$-diketone are used for accelerating the initiation preferably in combination with an aromatic amine. This combination is called a redox system. An example of such a system is a combination of benzoyl peroxide or camphorquinone with an amine (e.g., N,N-dimethyl-p-toluidine, N,N-dihydroxyethyl-p-toluidine, ethyl p-dimethylaminobenzoate, or a derivative thereof). Also preferred is a system including a peroxide in combination with ascorbic acid, a barbiturate, or a sulfinic acid as a reducing agent.

Subsequently, this work is heat-treated at about 100 to 200°C, upon which a polycondensation reaction occurs to form a separation function layer derived from the silane coupling agent, on the surface of the porous supporting layer. With respect to heating temperature, too high temperatures result in melting, depending on the material of the porous supporting layer, to close the pores of the porous supporting layer and, hence, the separation membrane finally obtained is reduced in water production rate. Meanwhile, too low temperatures result in insufficient polycondensation reaction to give a separation function layer which suffers dissolution and hence causes a decrease in rejection.

In the production method described above, the step for converting the silane coupling agent and the compound having one or more ethylenically unsaturated groups into a high-molecular compound may be conducted either before or after the step of condensation-polymerizing the silane coupling agent. Alternatively, the two steps may be simultaneously conducted.

The separation membrane having an organic-inorganic hybrid structure thus obtained can be used as such. It is, however, preferred that the surfaces of the separation membrane should be hydrophilized with, for example, an alcohol-containing aqueous solution or an aqueous alkali solution before use.

<Post-Treatment>

In ether of the separation membranes (i) and (ii) described above, the separation function layer may be subjected to a chemical treatment with a chlorine-containing compound, acid, alkali, nitrous acid, coupling agent, or the like for the purpose of improving the basic performances including permeability and rejection performance. The separation function layer may be further subjected to washing to remove any monomers remaining unpolymerized.

<Formation of Recesses and Protrusions>

Methods for imparting a difference in surface level to the separation membrane are not particularly limited. However, use can be made of a method in which the portion which, after the separation membrane is formed into an envelope-shaped membrane, becomes the area other than the strip-form ends is subjected to embossing, hydraulic forming, calendering, or the like. It is also possible to use a method in which a difference in surface level is imparted to the whole separation membrane and the portions to be the strip-form ends are thereafter smoothed by pressing to regulate the strip-form ends so as to have an average difference in separation membrane surface level of 50 $\mu$m or less. Furthermore, by subjecting the separation membrane to a heat treatment at 40 to 150°C during or after the forming of the separation membrane, the formability of the separation function layer, porous supporting layer, and substrate can be enhanced. As a result, not only the structure of the separation membrane can be inhibited from being destroyed by the forming, but also the retentivity of the rugged shape can be improved. With respect to the heat treatment temperature to be used for the forming, the heat treatment temperature for the polyester fibers can be determined by a known method by peeling only the substrate from the separation membrane and examining DSC of the substrate.

The step of forming recesses and protrusions in the separation membrane may be conducted at any stage in the separation membrane production. Namely, examples of the step of forming recesses and protrusions in the separation membrane include: a step in which the porous supporting layer is processed, before the formation of a separation function layer thereon, to impart ruggedness thereto; a step in which the substrate only is processed to impart ruggedness thereto; a step in which the laminate of a porous supporting layer with a substrate is processed to impart ruggedness thereto; or a step in which the separation membrane in which a separation function layer has been formed is processed to impart ruggedness thereto.

2. Production of Separation Membrane Element

<Formation of Feed-Side Spacer>

For applying a resin in the formation of a feed-side spacer 8, any method may be used without particular limitations so long as the resin can be disposed in a desired pattern arrangement in the strip-form ends of the feed-side surface of the separation membrane. Examples thereof include a nozzle type hot-melt applicator, spray type hot-melt applicator, flat-nozzle type hot-melt applicator, roll type coater, gravure coating, extrusion coater, printing, and spraying.

The step of applying a resin may be conducted at any timing during the separation membrane production. For example, a resin can be applied, prior to the production of the separation membrane, in the step of processing a supporting film or in the step of processing a laminate of a supporting film with a substrate, or can be applied, for example, in the step of processing the separation membrane.

As methods for thermal fusion bonding, use can be made of hot-air fusion bonding, hot-plate fusion bonding, laser fusion bonding, high-frequency fusion bonding, induction-heating fusion bonding, spin fusion bonding, oscillating fusion bonding, ultrasonic fusion bonding, DSI molding, and the like.

The cross-sectional shape, thickness (difference in surface level), etc. of the feed-side spacer 8 can be regulated by changing the kind of resin, the temperature for a heat treatment, e.g., thermal fusion bonding, etc.

<Formation of Permeate-Side Spacer>

Methods for forming the permeate-side spacer are not particularly limited. In the case of continuous formation, however, a preferred method is to laminate a spacer which has been processed beforehand to the permeate-side surface of the separation membrane. In the case of incontinuous formation, use may be made of a method in which a material for constituting the permeate-side spacer is directly disposed on the permeate-side surface of the separation membrane by printing, spraying, application with an applicator, hot-melt processing, etc., as in the formation of the feed-side spacer described above.

<Assembly of Element>

Using a conventional element production apparatus, an 8-inch element can, for example, be produced in which the number of leaves is 26 and the effective area is 37 $m^2$. For element production, the methods described in documents (JP-B-44-14216, JP-B-4-11928, and JP-A-11-226366) can be used.

Separation membranes are stacked, and are laminated to each other while being wound around the periphery of a water collection tube. For bonding the separation membranes to each other, it is preferred to use an adhesive having a viscosity in the range of 40 to 150 P (poises). The viscosity thereof is more preferably 50 to 120 P. In case where the viscosity of the adhesive is too high, wrinkles are apt to generate when the stacked leaves are wound around a water collection tube and the resultant separation membrane element tends to have impaired performance. Conversely, in case where the viscosity of the adhesive is too low, the adhesive flows out from the ends (areas to be bonded) of the leaves to not only foul the device but also adhere to other areas to impair the performance of the separation membrane element. In addition, the adhesive which has flowed out need to be removed, and this considerably reduces the efficiency of the operation.

The amount of the adhesive to be applied may be regulated so that, after the leaves have been wound around a water collection tube, the width of each region where the adhesive is adherent to the surface of the separation membrane is 10-100 mm. When the width of application is 10 mm or larger, bonding failures are inhibited from occurring. Consequently, the feed fluid is inhibited from partly flowing into the permeate side. Meanwhile, there are cases where the adhesive spreads when the separation membranes are wound, resulting in a decrease in the area of the separation membranes which take part in separation (i.e., effective membrane area). In this connection, when the width of each region where the adhesive is adherent is 100 mm or less, an effective membrane area can be ensured.

Preferred as the adhesive is a urethane adhesive. From the standpoint of obtaining a viscosity in the range of 40 to 150 P, a urethane adhesive obtained by mixing an isocyanate as a main ingredient with a polyol as a hardener in an isocyanate/polyol ratio of from 1/1 to 1/5 is preferred. With respect to the viscosity of an adhesive, the viscosity of each of the main ingredient, the hardener alone, and a mixture prepared by mixing the two in a specified proportion was measured beforehand with a Brookfield viscometer (JIS K 6833).

VI. Use of the Separation Membrane Element

The separation membrane elements are connected serially or in parallel and housed in a pressure vessel, thereby applying the separation membrane elements to a separation membrane module.

The separation membrane elements and the module can be used in combination with a pump for supplying a fluid thereto, a device for pretreating the fluid, etc., to configure a fluid separation apparatus. By using this separation apparatus, feed water can, for example, be separated into permeate, e.g., drinkable water, and concentrate which did not pass through the membrane. Thus, water suitable for the purpose can be obtained.

The higher the operating pressure of the fluid separation apparatus, the more the salt rejection is improved. However, when the resultant increase in the amount of energy required for the operation and the retentivity of the feed passage and permeate passage of each separation membrane element are taken into account, it is preferred that the operating pressure to be applied when water to be treated is passed through the separation membrane module should be 0.2 to 8 MPa. With respect to the temperature of the feed water, higher temperatures result in a decrease in salt rejection but the transport flux decreases as the temperature of the feed water declines. Consequently, it is preferred that the temperature thereof should be 5 to 45°C. With respect to the pH of the raw fluid, high pH values result in a possibility that scales of magnesium, etc. might generate in the case of feed water having a high salt concentration, such as seawater. In addition, there is a concern of membrane deterioration due to the high-pH operation. It is therefore preferred to operate the apparatus in a neutral range.

The fluid to be treated with the separation membrane element is not particularly limited. In the case of use for water treatment, however, examples of the feed water include liquid mixtures having a content of TDS (Total Dissolved Solids) of 500 mg/L to 100 g/L, such as seawater, brine water, and wastewater. In general, TDS means the content of total dissolved solids, and is expressed in terms of "mass/volume" or "weight ratio". In accordance with a definition, the content of TDS can be calculated from the weight of a residue obtained by evaporating, at a temperature of 39.5 to 40.5°C, the solution which has been filtered with a 0.45-μm filter. In a simpler method, the practical salinity (S) is converted to the content of TDS.

EXAMPLES

The invention will be explained below in more detail by reference to Examples. However, the invention should not be construed as being limited by the following Examples in any way.

(Rate of Water Production with Separation Membrane)

Feed water was separated with a separation membrane into permeate and concentrate, and the amount of the permeate thus obtained was determined as the amount of water produced with the separation membrane. Specifically, the amount of the permeate ($m^3$) produced per day per membrane area of 1 $m^2$ was expressed as the rate of water production ($m^3/m^2/day$).

(Salt Rejection by Separation Membrane)

The feed water and the permeate were examined for electrical conductivity, and the salt rejection was calculated using the following equation.

$$\text{Salt rejection (TDS rejection) (\%)} = \{1 - (\text{TDS concentration of permeate})/(\text{TDS concentration of feed water})\} \times 100$$

(Rate of Water Production with Separation Membrane Element)

Feed water was separated with a separation membrane element into permeate and concentrate, and the amount of the permeate thus obtained was determined as the amount of water produced with the separation membrane element. Specifically, the amount of the permeate (m³) produced per element per day was expressed as the rate of water production (m³/day).

(Salt Rejection by Separation Membrane Element)

The feed water, permeate, and concentrate were examined for electrical conductivity, and the salt rejection was calculated using the following equation.

$$\text{Salt rejection (TDS rejection) (\%)} = \{1-[2\times(\text{TDS concentration of permeate})]/[(\text{TDS concentration of feed water})+(\text{TDS concentration of concentrate}]\}\times100$$

(Difference in Surface Level of Separation Membrane)

The strip-form ends and the area (rugged area) other than the strip-form ends were subjected to an examination with high-precision shape measurement system KS-1100, manufactured by Keyence Corp., in which 1 cm $\times$ 1 cm surface portions were examined. The results were analyzed for an average difference in surface level. The difference in surface level between the highest portion of a protrusion and the lowest portion of a recess which adjoined the protrusion was measured, and an average of such surface level differences was determined. With respect to the strip-form ends, surface level differences less than 1 $\mu$m were excluded, and portions where there was a surface level difference of 1 $\mu$m or larger were examined. With respect to the area (rugged region) other than the strip-form ends, surface level differences less than 10 $\mu$m were excluded, and portions where there was a surface level difference of 10 $\mu$m or larger were examined. With respect to each of the strip-form ends and the rugged region, the sum of the measured values of height was divided by the number of all portions where the measurement was made (100 portions), thereby determining an arithmetic mean value. The operation described above was conducted with respect to three samples, and the values of the difference in separation membrane surface level obtained for the respective samples were averaged.

(Degree of Fiber Orientation of Substrate)

Ten small-piece samples were randomly cut out of the nonwoven fabric and photographed with a scanning electron microscope at a magnification of 100 to 1,000 diameters. Twenty fiber images were randomly selected from the fiber images of each sample. With respect to a total of 100 fibers, the angle of each fiber image was measured, while taking the longitudinal direction of the nonwoven fabric (lengthwise direction) as 0° and the width direction of the nonwoven fabric (transverse direction) as 90°. The average of these values was rounded off to the nearest whole number to determine the degree of fiber orientation.

(EXAMPLE 1)

A dimethylformamide (DMF) solution containing a polysulfone in a concentration of 17.0% by weight was cast at room temperature (25°C) in a thickness of 150 $\mu$m on a sheet of nonwoven fabric constituted of polyester long fibers (fiber diameter, 1 decitex; thickness, about 90 $\mu$m; air permeability, 1 cc/cm²/sec; degree of fiber orientation in surface layer on the porous-supporting-layer side, 40°; degree of fiber orientation in surface layer on the side opposite to the porous supporting layer, 20°). Immediately after the casting, this nonwoven fabric was immersed in pure water and allowed to stand in the pure water for 5 minutes. Thus, a roll of a porous supporting layer (thickness, 130 $\mu$m) constituted of a fiber-reinforced supporting polysulfone film was produced.

Thereafter, the roll of a porous supporting membrane was unwound, and an aqueous solution of 3.5% by weight m-phenylenediamine and 1.5% by weight ε-caprolactam was applied to the polysulfone surface. Subsequently, nitrogen was blown against the surface by means of an air nozzle to thereby remove the excess aqueous solution from the surface of the supporting film. Next, a 25°C n-decane solution containing 0.165% by weight trimesoyl chloride was applied so that the surface of the porous supporting membrane was completely wetted. Thereafter, the excess solution was removed from the film by air blowing, and the web was rinsed with 85°C hot water to obtain a continuous separation membrane sheet.

The separation membrane thus obtained was used in an operation under the conditions of seawater with a TDS concentration of 3.5%, operating pressure of 5.5 MPa, operating temperature of 25°C, and pH of 6.5. As a result, the separation membrane performance was a salt rejection of 99.2% and a rate of water production of 0.75 m$^3$/m$^2$/day.

Thereafter, the continuous sheet was cut into a suitable size, and that region in the sheet separation membrane which was the area other than ends was embossed to impart a difference in surface level thereto so that each envelope-shaped membrane to be formed had strip-form ends having a width of 70 mm. The embossing was conducted by passing the separation membrane preheated to 80°C through the gap between embossing rolls heated at 95°C, at a pressure of 100 kg/cm$^2$.

Subsequently, a urethane adhesive (isocyanate/polyol = 1/3) was applied to those strip-form ends of the sheet separation membrane having the difference in surface level which were located respectively on both ends in terms of the longitudinal direction of the perforated water collection tube. Thereafter, this sheet separation membrane was folded so that the folded sheet was open at one edge. Such folded sheets were stacked to produce 26 envelope-shaped membranes having a width of 930 mm, so that the separation membrane element had an effective area of 37 m$^2$. The strip-form ends of each envelope-shaped membrane had an average difference in separation membrane surface level X of 18 μm, and that region in each envelope-shaped membrane which was the area other than the strip-form ends had an average difference in separation membrane surface level Y of 350 μm.

Thereafter, opening-side given portions of the envelope-shaped membranes were bonded to the peripheral surface of a perforated water collection tube to produce a separation membrane element in which the membranes had been spirally wound. A film was wound on the periphery of the element and fixed with a tape. Thereafter, edge cutting, end plate attachment, and filament winding were conducted to produce an 8-inch element. This element was placed in a pressure vessel and operated under the conditions of seawater with a TDS concentration of 3.5%, operating pressure of 5.5 MPa, operating temperature of 25°C, and pH of 6.5 (recovery, 15%). As a result, the element showed a salt rejection of 99.2% and a rate of water production of 20.8 m$^3$/day.

(EXAMPLES 2 TO 16)

In Example 2, an element was produced and evaluated in the same manner as in Example 1, except that the sheet separation membrane was wholly embossed and both ends of the sheet separation membrane were thereafter hot-pressed (1.0 MPa, 95°C) so that the strip-form ends of each envelope-shaped membrane had an average difference in separation membrane surface level of 42 μm. As a result, this element showed a salt rejection of 99.0% and a rate of water production of 20.1 m$^3$/day. Thus, a spiral type separation membrane element usable for the desalination of seawater was obtained.

In Example 3, an element was produced and evaluated in the same manner as in Example 1, except that the region in each envelope-shaped membrane which was the area other than the strip-form ends was made to have an average difference in separation membrane surface level of 910 μm. As a result, the element showed a salt rejection of 99.0% and a rate of water production of 23.3 m$^3$/day. Thus, a spiral type separation membrane element usable for the desalination of seawater was obtained.

In Example 4, an element was produced and evaluated in the same manner as in Example 1, except that the region in each envelope-shaped membrane which was the area other than the strip-form ends was made to have an average difference in separation membrane surface level of 1,920 μm. As a result, the element showed a salt rejection of 96.0% and a rate of water production of 25.2 m$^3$/day. The salt rejection had decreased slightly.

In Example 5, an element was produced and evaluated in the same manner as in Example 1, except that the region in each envelope-shaped membrane which was the area other than the strip-form ends was made to have an average difference in separation membrane surface level of 110 μm. As a result, the element showed a salt rejection of 96.5% and a rate of water production of 17.6 m$^3$/day. The salt rejection and the rate of water production had decreased slightly.

In Example 6, an element was produced and evaluated in the same manner as in Example 1, except that the sheet separation membrane was wholly embossed to make the separation membrane have an average difference in surface level of 1,920 μm and, thereafter, both ends of the sheet separation membrane were hot-pressed (1.0 MPa, 95°C) so that the strip-form ends of each envelope-shaped membrane had an average difference in separation membrane surface level of 48 μm. As a result, the element showed a salt rejection of 95.4% and a rate of water production of 24.2 m$^3$/day. The salt rejection had decreased slightly.

In Example 7, an element was produced and evaluated in the same manner as in Example 1, except that the rugged shape of the sheet separation membrane was changed to the shape of rhombic protrusions. As a result, the element showed a salt rejection of 98.9% and a rate of water production of 20.0 m$^3$/day. The salt rejection and the rate of water production had decreased slightly.

In Example 8, an element was produced and evaluated in the same manner as in Example 1, except that the substrate was changed from the long-fiber nonwoven fabric to a sheet of nonwoven fabric obtained by a wet formation method. As a result, the separation membrane showed reduced formability when ruggedness was imparted to the surface thereof and, hence, the element showed a salt rejection of 97.9% and a rate of water production of 19.5 m$^3$/day. The salt rejection and the rate of water production had decreased slightly.

In Example 9, the same procedure as in Example 1 was conducted, except that the substrate was replaced by a substrate in which the degree of fiber orientation in a surface layer on the porous-supporting-layer side was 20° and the degree of fiber orientation in a surface layer on the side opposite to the porous supporting layer was 40°.

As a result, the separation membrane showed reduced formability when ruggedness was imparted to the surface thereof and, hence, the element showed a salt rejection of 97.8% and a rate of water production of 19.8 m$^3$/day. The salt rejection and the rate of water production had decreased slightly.

In Example 10, the same procedure as in Example 1 was conducted, except that an ethylene/vinyl acetate copolymer resin (701 A) was thermally fusion-bonded in a striped-pattern arrangement to the feed-side (raw-fluid-side) surface of both strip-form ends of the embossed sheet separation membrane with a nozzle type hot-melt applicator to dispose a feed-side spacer, under the conditions of an interval between lines of 5.0 mm, line width of 1.0 mm, height of 400 μm, inclination angle θ of 45°, and application width of 70 mm.

As a result, the efficiency of supply of the raw fluid to the feed-side surface of the separation membrane was able to be further heightened and, hence, the element showed a salt rejection of 99.2% and a rate of water production of 22.8 m$^3$/day. The rate of water production had increased.

In Example 11, an element was produced and evaluated in the same manner as in Example 10, except that the inclination angle θ in the impartation of the striped pattern was changed to 20°. As a result, the element showed a salt rejection of 99.1% and a rate of water production of 22.4 m$^3$/day.

In Example 12, an element was produced in the same manner as in Example 10, except that the resin application pattern was changed to lattice-pattern dots (interval, 7.0 mm; diameter, 1.0 mm, height, 400 μm; application width, 70 mm). As a result, the element showed a salt rejection of 99.2% and a rate of water production of 21.9 m$^3$/day.

In Example 13, the same procedure as in Example 1 was conducted, except that tricot (thickness, 300 μm; groove width, 250 μm; ridge width, 250 μm; groove depth, 105 μm) was disposed as a permeate-side spacer.

As a result, the efficiency of flow of the permeated fluid was able to be heightened and, hence, the element showed a salt rejection of 99.1 % and a rate of water production of 23.8 m$^3$/day. The rate of water production had increased.

In Example 14, the same procedure as in Example 1 was conducted, except that an ethylene/vinyl acetate copolymer resin (RH-173) was thermally fusion-bonded as a permeate-side spacer to the permeate-side (permeate raw-fluid side) surface of the rugged area (the area other than both strip-form ends) of the embossed sheet separation membrane with a nozzle type hot-melt applicator so that the resin was disposed in a striped-pattern arrangement along the longitudinal direction of the permeate collection tube and that the pattern had a height of 140 μm, a trapezoidal cross-sectional shape in which the upper side and the lower side had dimensions of 0.4 mm and 0.6 mm, respectively, a groove width of 0.4 mm, and an interval of 1.0 mm.

As a result, the efficiency of flow of the permeated fluid was able to be further heightened and, hence, the element showed a salt rejection of 99.1 % and a rate of water production of 25.0 m$^3$/day. The rate of water production had increased.

In Example 15, the same procedure as in Example 10 was conducted, except that tricot (thickness, 300 μm; groove width, 250 μm; ridge width, 250 μm; groove depth, 105 μm) was disposed as a permeate-side spacer.

As a result, the efficiency of flow of the permeated fluid was able to be heightened and, hence, the element showed a salt rejection of 99.2% and a rate of water production of 24.3 m$^3$/day. The rate of water production had increased.

In Example 16, the same procedure as in Example 10 was conducted, except that an ethylene/vinyl acetate copolymer resin (RH-173A) was thermally fusion-bonded as a permeate-side spacer to the permeate-side (permeate raw-fluid side) surface of the rugged area (the area other than both strip-form ends) of the embossed sheet separation membrane with a nozzle type hot-melt applicator so that the resin was disposed in a striped-pattern arrangement along the longitudinal direction of the permeate collection tube and that the pattern had a height of 140 μm, a trapezoidal cross-sectional shape in which the upper side and the lower side had dimensions of 0.4 mm and 0.6 mm, respectively, a groove width of 0.4 mm, and an interval of 1.0 mm.

As a result, the efficiency of flow of the permeated fluid was able to be further heightened and, hence, the element showed a salt rejection of 99.2% and a rate of water production of 27.1 m$^3$/day. The rate of water production had increased.

(EXAMPLE 17)

Cellulose diacetate (CDA) and cellulose triacetate (CTA) were used as resins, and acetone and dioxane were used as solvents. Methanol, maleic acid (MA), and butanetetracarboxylic acid (BTC) were added thereto as additives. These ingredients were sufficiently stirred at a temperature of 45°C to obtain a dope composed of 10% by weight CDA, 7% by weight CTA, 25% by weight acetone, 45% by weight dioxane, 10% by weight methanol, 1% by weight MA, and 2% by weight BTC.

Subsequently, the dope was cooled to 25°C and then applied in a thickness of 200 $\mu$m on a sheet of nonwoven fabric constituted of polyester long fibers (fiber diameter, 1 decitex; thickness, about 90 $\mu$m; air permeability, 1 cc/cm$^2$/sec; degree of fiber orientation in surface layer on the porous-supporting-layer side, 40°; degree of fiber orientation in surface layer on the side opposite to the porous supporting layer, 20°). This coated nonwoven fabric was exposed to a wind blowing at a velocity of 0.2 m/sec to vaporize the solvents for 60 seconds. Thereafter, the nonwoven fabric was immersed in a 15°C coagulating bath for 30 minutes to coagulate the resins and then further subjected to a 5-minute heat treatment by immersion in 95°C hot water. Thus, a separation membrane constituted of a substrate and a porous resin layer (separation function layer) formed thereon was obtained. The separation membrane obtained was used in an operation under the conditions of seawater with a TDS concentration of 3.5%, operating pressure of 5.5 MPa, operating temperature of 25°C, and pH of 6.5. As a result, the separation membrane performance was a salt rejection of 99.3% and a rate of water production of 0.45 m$^3$/m$^2$/day. This separation membrane was used to produce an element in the same manner as in Example 1, and the element was evaluated. As a result, the element showed a salt rejection of 99.3% and a rate of water production of 16.2 m$^3$/day.

(EXAMPLES 18 TO 20)

In Example 18, a 2-inch element was produced and evaluated in the same manner as in Example 1, except that the region in the sheet separation membrane which was the area other than the ends was embossed so that each envelope-shaped membrane to be formed from this sheet separation membrane had strip-form ends having a width of 40 mm, and that two envelope-shaped membranes having a width of 280 mm and having an effective area, in terms of the effective area of the separation membrane  element, of 0.5 m$^2$ were produced. As a result, the element showed a salt rejection of 99.3% and a rate of water production of 0.29 m$^3$/day.
In Example 19, the same procedure as in Example 18 was conducted, except that an ethylene/vinyl acetate copolymer resin (70 1 A) was thermally fusion-bonded in a striped-pattern arrangement to the feed-side (raw-fluid-side) surface of both strip-form ends of the embossed sheet separation membrane with a nozzle type hot-melt applicator to dispose a feed-side spacer, under the conditions of an interval between lines of 5.0 mm, line width of 1.0 mm, height of 400 $\mu$m, inclination angle $\theta$ of 45°, and application width of 40 mm.
As a result, the feed efficiency of the raw fluid to the feed-side surface of the separation membrane was able to be further heightened and, hence, the element showed a salt rejection of 99.3% and a rate of water production of 0.32 m$^3$/day. The rate of water production had increased.
In Example 20, the same procedure as in Example 18 was conducted, except that an ethylene/vinyl acetate copolymer resin (RH-173) was thermally fusion-bonded as a permeate-side spacer to the permeate-side (permeate raw-fluid side) surface of the rugged area (the area other than both strip-form ends) of the embossed sheet separation membrane with a nozzle type hot-melt applicator so that the resin was disposed in a striped-pattern arrangement along the longitudinal direction of the permeate collection tube and that the pattern had a height of 140 $\mu$m, a trapezoidal cross-sectional shape in which the upper side and the lower side had dimensions of 0.4 mm and 0.6 mm, respectively, a groove width of 0.4 mm, and an interval of 1.0 mm.
As a result, the efficiency of flow of the permeated fluid on the permeate-side surface of the separation membrane was able to be further heightened and, hence, the element showed a salt rejection of 99.2% and a rate of water production of 0.36 m$^3$/day. The rate of water production had increased.

(COMPARATIVE EXAMPLES 1 TO 4)

In Comparative Example 1, an element was produced and evaluated in the same manner as in Example 1, except that the sheet separation membrane was wholly embossed so that the strip-form ends of each envelope-shaped membrane had an average difference in separation membrane surface level of 350 $\mu$m. As a result, the element showed a salt rejection of 88.0% and a rate of water production of 24.0 m$^3$/day. The salt rejection had decreased considerably.
In Comparative Example 2, the sheet separation membrane was wholly embossed and both ends of the sheet separation membrane were thereafter hot-pressed for smoothing under the conditions of 1.0 MPa and 70°C. As a result, the strip-form ends of each envelope-shaped membrane had an average difference in separation membrane surface level which was outside the range according to the invention, and the element showed a salt rejection of 95.2% and a rate of water production of 23.1 m$^3$/day. The salt rejection had decreased considerably.
In Comparative Example 4, an element was produced and evaluated in the same manner as in Example 1, except that only both ends of the sheet separation membrane were embossed so that the strip-form ends of each envelope-shaped membrane had an average difference in separation membrane surface level of 90 $\mu$m and the region in the envelope-shaped membrane which was the area other than the  strip-form ends had a difference in separation membrane surface level of 18 $\mu$m. As a result, the element showed a salt rejection of 82.2% and a rate of water production of 14.8 m$^3$/day. Both the salt rejection and the rate of water production had decreased.

In Comparative Example 5, an element was produced and evaluated in the same manner as in Example 1, except that the sheet separation membrane was not embossed and that both the strip-form ends of each envelope-shaped membrane and the region in the envelope-shaped membrane which was the area other than the strip-form ends had a difference in separation membrane surface level of 18 $\mu$m. As a result, the sheet separation membranes came into close contact with each other and neither a feed-side passage nor a permeate-side passage was able to be ensured. The element performance was hence unable to be measured.

Table 1

| | Difference in surface level of separation membrane | | | Feed-side spacer | | | | | | | |
|---|---|---|---|---|---|---|---|---|---|---|
| | Strip-form end X (μm) | Area other than strip-form ends Y (μm) | Rugged shape | Material | Shape | Line width or diameter (mm) | Interval | Height | Application width (mm) | Inclination angle (°) |
| Ex. 1 | 18 | 350 | net | - | - | - | - | - | - | - |
| Ex. 2 | 42 | 350 | net | - | - | - | - | - | - | - |
| Ex. 3 | 18 | 910 | net | - | - | - | - | - | - | - |
| Ex. 4 | 18 | 1920 | net | - | - | - | - | - | - | - |
| Ex. 5 | 18 | 110 | net | - | - | - | - | - | - | - |
| Ex. 6 | 48 | 1920 | net | - | - | - | - | - | - | - |
| Ex. 7 | 18 | 350 | Rhombic protrusions | - | - | - | - | - | - | - |
| Ex. 8 | 18 | 350 | net | - | - | - | - | - | - | - |
| Ex. 9 | 18 | 350 | net | - | - | - | - | - | - | - |
| Ex. 10 | 18 | 350 | net | EVA | stripes | 1.0 | 5.0 | 0.4 | 70 | 45 |
| Ex. 11 | 18 | 350 | net | EVA | stripes | 1.0 | 5.0 | 0.4 | 70 | 20 |
| Ex. 12 | 18 | 350 | net | EVA | dots (lattice) | 1.0 | 7.0 | 0.4 | 70 | - |
| Ex. 13 | 18 | 350 | net | - | - | - | - | - | - | - |
| Ex. 14 | 18 | 350 | net | - | - | - | - | - | - | - |
| Ex. 15 | 18 | 350 | net | EVA | stripes | 1.0 | 5.0 | 0.4 | 70 | 45 |
| Ex. 16 | 18 | 350 | net | EVA | stripes | 1.0 | 5.0 | 0.4 | 70 | 45 |
| Ex. 17 | 18 | 350 | net | - | - | - | - | - | - | - |
| Ex. 18 | 18 | 350 | net | - | - | - | - | - | - | - |
| Ex. 19 | 18 | 350 | net | EVA | stripes | 1.0 | 5.0 | 0.4 | 40 | 45 |
| Ex. 20 | 18 | 350 | net | EVA | stripes | 1.0 | 5.0 | 0.4 | 40 | 45 |

(continued)

| | Difference in surface level of separation membrane | | | Feed-side spacer | | | | | | |
|---|---|---|---|---|---|---|---|---|---|---|
| | Strip-form end X ($\mu$m) | Area other than strip-form ends Y ($\mu$m) | Rugged shape | Material | Shape | Line width or diameter (mm) | Interval | Height | Application width (mm) | Inclination angle (°) |
| Comp. Ex. 1 | 350 | 350 | net | - | - | - | - | - | - | - - |
| Comp. Ex. 2 | 60 | 350 | net | - | - | - | - | - | - | - |
| Comp. Ex. 3 | 90 | 18 | net | - | - | - | - | - | - | - |
| Comp. Ex. 4 | 18 | 18 | - | - | - | - | - | - | - | - |

| | Permeate-side passage material | | Separation membrane | |
|---|---|---|---|---|
| | Material | Shape | Separatory layer/ supporting layer/ substrate | Thickness ($\mu$m) |
| Ex. 1 | - | - | polyamide/ polysulfone/PET nonwoven fabric | 0.1/40/90 |
| Ex. 2 | - | - | polyamide/ polysulfone/PET nonwoven fabric | 0.1/40/90 |
| Ex. 3 | - | - | polyamide/ polysulfone/PET nonwoven fabric | 0.1/40/90 |
| Ex. 4 | - | - | polyamide/ polysulfone/PET nonwoven fabric | 0.1/40/90 |
| Ex. 5 | - | - | polyamide/ polysulfone/PET nonwoven fabric | 0.1/40/90 |

(continued)

| | Permeate-side passage material | | Separation membrane | |
| --- | --- | --- | --- | --- |
| | Material | Shape | Separatory layer/ supporting layer/ substrate | Thickness ($\mu$m) |
| Ex. 6 | - | - | polyamide/ polysulfone/PET nonwoven fabric | 0.1/40/90 |
| Ex. 7 | - | - | polyamide/ polysulfone/PET nonwoven fabric | 0.1/40/90 |
| Ex. 8 | - | - | polyamide/ polysulfone/wet-formed PET sheet | 0.1/40/85 |
| Ex. 9 | - | - | polyamide/ polysulfone/PET nonwoven fabric | 0.1/40/90 |
| Ex. 10 | - | - | polyamide/ polysulfone/PET nonwoven fabric | 0.1/40/90 |
| Ex. 11 | - | - | polyamide/ polysulfone/PET nonwoven fabric | 0.1/40/90 |
| Ex. 12 | - | - | polyamide/ polysulfone/PET nonwoven fabric | 0.1/40/90 |
| Ex. 13 | PET | tricot | polyamide/ polysulfone/PET nonwoven fabric | 0.1/40/90 |
| Ex. 14 | EVA | stripes | polyamide/ polysulfone/PET nonwoven fabric | 0.1/40/90 |

(continued)

| | Permeate-side passage material | | Separation membrane | |
| --- | --- | --- | --- | --- |
| | Material | Shape | Separatory layer/ supporting layer/ substrate | Thickness (μm) |
| Ex. 15 | PET | tricot | polyamide/ polysulfone/PET nonwoven fabric | 0.1/40/90 |
| Ex. 16 | EVA | stripes | polyamide/ polysulfone/PET nonwoven fabric | 0.1/40/90 |
| Ex. 17 | - | - | CDA, CTA/PET nonwoven fabric | 55/-/90 |
| Ex. 18 | - | - | polyamide/ polysulfone/PET nonwoven fabric | 0.1/40/90 |
| Ex. 19 | - | - | polyamide/ polysulfone/PET nonwoven fabric | 0.1/40/90 |
| Ex. 20 | EVA | stripes | polyamide/ polysulfone/PET nonwoven fabric | 0.1/40/90 |
| Comp. Ex. 1 | - | - | polyamide/ polysulfone/PET nonwoven fabric | 0.1/40/90 |
| Comp. Ex. 2 | - | - | polyamide/ polysulfone/PET nonwoven fabric | 0.1/40/90 |
| Comp. Ex. 3 | - | - | polyamide/ polysulfone/PET nonwoven fabric | 0.1/40/90 |

(continued)

| | Permeate-side passage material | | Separation membrane | | |
|---|---|---|---|---|---|
| | Material | Shape | Separatory layer/ supporting layer/ substrate | Thickness ($\mu$m) | |
| Comp. Ex. 4 | - | - | polyamide/ polysulfone/PET nonwoven fabric | 0.1/40/90 | |

| | Remarks |
|---|---|
| Ex. 1 | No ruggedness was imparted to the strip-form ends |
| Ex. 2 | Ruggedness was imparted to the whole separation membrane and the strip-form ends were then smoothed |
| Ex. 3 | Difference in surface level was changed |
| Ex. 4 | Difference in surface level was changed |
| Ex. 5 | Difference in surface level was changed |
| Ex. 6 | Ruggedness was imparted to the whole separation membrane and the strip-form ends were then smoothed |
| Ex. 7 | Rugged shape was changed |
| Ex. 8 | Substrate was changed |
| Ex. 9 | Degree of orientation of substrate fibers was changed |
| Ex. 10 | Feed-side spacer was disposed |
| Ex. 11 | Shape of feed-side spacer was changed |
| Ex. 12 | Shape of feed-side spacer was changed |
| Ex. 13 | Permeated-side spacer was disposed |
| Ex. 14 | Shape of permeated-side spacer was changed |
| Ex. 15 | Feed-side and permeated-side spacers were disposed |
| Ex. 16 | Feed-side and permeated-side spacers were disposed |
| Ex. 17 | Separation membrane was changed |
| Ex. 18 | Element size was changed |

(continued)

|  | Remarks |
| --- | --- |
| Ex. 19 | Element size was changed |
| Ex. 20 | Element size was changed |
| Comp. Ex. 1 | Ruggedness was imparted to the whole separation membrane |
| Comp. Ex. 2 | Ruggedness was imparted to the whole separation membrane and the strip-form end areas were then smoothed |
| Comp. Ex. 3 | No ruggedness was imparted to the area other than the strip-form ends |
| Comp. Ex. 4 | No ruggedness was imparted to the separation membrane |

Table 2

|  | TDS rejection (%) | Rate of water production (m³/day) |
|---|---|---|
| Example 1 | 99.2 | 20.8 |
| Example 2 | 99.0 | 20.1 |
| Example 3 | 99.0 | 23.3 |
| Example 4 | 96.0 | 25.2 |
| Example 5 | 96.5 | 17.6 |
| Example 6 | 95.4 | 24.2 |
| Example 7 | 98.9 | 20.0 |
| Example 8 | 97.9 | 19.5 |
| Example 9 | 97.8 | 19.8 |
| Example 10 | 99.2 | 22.8 |
| Example 11 | 99.1 | 22.4 |
| Example 12 | 99.2 | 21.9 |
| Example 13 | 99.1 | 23.8 |
| Example 14 | 99.1 | 25.0 |
| Example 15 | 99.2 | 24.3 |
| Example 16 | 99.2 | 27.1 |
| Example 17 | 99.3 | 16.2 |
| Example 18 | 99.3 | 0.29 |
| Example 19 | 99.3 | 0.32 |
| Example 20 | 99.2 | 0.36 |
| Comparative Example 1 | 88.0 | 24.0 |
| Comparative Example 2 | 95.2 | 23.1 |
| Comparative Example 3 | 82.2 | 14.8 |
| Comparative Example 4 | - | - |

INDUSTRIAL APPLICABILITY

The separation membrane and separation membrane element of the invention are especially suitable for use in the desalination of brine water or seawater.

DESCRIPTION OF REFERENCE NUMERALS AND SIGNS

1a, 1b, 1c, 1d, 1e: Separation membrane element
2: Feed-side spacer (net)
3, 3a, 3b, 10, 14: Separation membrane
4: Permeate-side spacer (tricot)
5a, 5b: Envelope-shaped membrane
6: Perforated water collection tube
7, 9, 3 3 : Strip-form end
8, 41, 42: Feed-side spacer (resin)

411, 421: Resinous object
11, 15: Substrate
12: Porous supporting layer
13, 16: Separation function layer
34: Feed-side surface of separation membrane
35: Permeate-side surface of separation membrane
X: Difference in separation membrane surface level of strip-form end
Y: Difference in separation membrane surface level of area other than strip-form end

## Claims

1. A separation membrane element comprising:

   a perforated water collection tube; and
   an envelope-shaped membrane which is formed of a separation membrane and is wound around a periphery of the perforated water collection tube,
   wherein the separation membrane has a difference in surface level of 100 to 2,000 $\mu$m on at least one surface thereof and has a strip-form region in each of both ends of the separation membrane in terms of the longitudinal direction of the perforated water collection tube, the strip-form region having an average difference in surface level of 50 $\mu$m or less.

2. The separation membrane element according to claim 1, wherein the separation membrane has the strip-form region with an average difference in surface level of 50 $\mu$m or less in each of all ends of the separation membrane, except the end thereof located on a side facing the water collection tube.

3. The separation membrane element according to claim 1 or 2, which further includes a feed-side spacer fused to either a strip-form end located on a raw-fluid inlet side or both the strip-form end located on the raw-fluid inlet side and a strip-form end located on a concentrate outlet side.

4. The separation membrane element according to any one of claims 1 to 3, wherein the separation membrane comprises a substrate and a separation function layer formed on the substrate.

5. The separation membrane element according to any one of claims 1 to 4, wherein the separation membrane comprises a substrate, a porous supporting layer formed on the substrate, and a separation function layer formed on the porous supporting layer.

6. The separation membrane element according to claim 4 or 5, wherein the substrate is a long-fiber nonwoven fabric.

7. The separation membrane element according to claim 6, wherein in the long-fiber nonwoven fabric, fibers present in a surface layer on a side opposite to the porous supporting layer have a higher degree of longitudinal orientation than fibers present in a surface layer on a side facing the porous supporting layer.

## Fig. 1

## Fig. 2

## Fig. 3

## Fig. 4

*Fig. 5*

Fig. 6

*Fig. 7*

*Fig. 8*

*Fig. 9*

*Fig. 10*

X ⟶

*Fig. 11*

*Fig. 12*

Fig. 13

| INTERNATIONAL SEARCH REPORT | International application No. |
|---|---|
| | PCT/JP2011/080244 |

A.  CLASSIFICATION OF SUBJECT MATTER
*B01D63/10*(2006.01)i, *B01D69/06*(2006.01)i, *B01D69/12*(2006.01)i

According to International Patent Classification (IPC) or to both national classification and IPC

B.  FIELDS SEARCHED

Minimum documentation searched (classification system followed by classification symbols)
B01D61/00-71/82, C02F1/44

Documentation searched other than minimum documentation to the extent that such documents are included in the fields searched
Jitsuyo Shinan Koho       1922-1996    Jitsuyo Shinan Toroku Koho    1996-2012
Kokai Jitsuyo Shinan Koho  1971-2012    Toroku Jitsuyo Shinan Koho    1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 63-69503 A  (Advanced Polymer Technology, Inc.), 29 March 1988 (29.03.1988), claims; page 12, lower left column, line 13 to page 13, upper left column, line 13; page 15, upper left column, line 6 to lower left column, line 16; fig. 1, 3b, 6 & US 4756835 A | 1-7 |
| A | JP 2008-302344 A  (Nitto Denko Corp.), 18 December 2008 (18.12.2008), paragraph [0004]; fig. 7 & US 2008/302719 A1     & CN 101322918 A & KR 2008-108916 A | 1-7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 February, 2012 (17.02.12) | 06 March, 2012 (06.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 659 952 A1

**INTERNATIONAL SEARCH REPORT**

International application No.

PCT/JP2011/080244

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-507406 A  (Pionetics Corp.),<br>13 March 2008 (13.03.2008),<br>paragraphs [0017], [0022], [0035]; fig. 1 to 3,<br>6<br>& US 2006/016685 A1      & EP 1768768 A<br>& WO 2006/015034 A2      & KR 2007-052285 A<br>& CN 101001690 A | 1-7 |
| A | JP 2010-125418 A  (Nitto Denko Corp.),<br>10 June 2010 (10.06.2010),<br>claims 1, 5, 6; paragraphs [0028], [0034],<br>[0037]; fig. 1 to 3, 6<br>(Family: none) | 1-7 |

Form PCT/ISA/210 (continuation of second sheet) (July 2009)

45

<table>
<tr><td><strong>INTERNATIONAL SEARCH REPORT</strong></td><td>International application No.<br>PCT/JP2011/080244</td></tr>
</table>

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
    The invention of claim 1 does not have novelty in the light of JP 63-69503 A.
    Consequently, any same or corresponding special technical feature cannot be found between the invention of claim 1 and the inventions of claims 2-7.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

    ☐ The additional search fees were accompanied by the applicant's protest but the applicable protest fee was not paid within the time limit specified in the invitation.

    ☐ No protest accompanied the payment of additional search fees.

Form PCT/ISA/210 (continuation of first sheet (2)) (July 2009)

**REFERENCES CITED IN THE DESCRIPTION**

**Patent documents cited in the description**

- JP 63069503 A
- JP 2010099590 A
- JP 2010125418 A
- JP 4414216 B
- JP 4011928 B
- JP 11226366 A

**Non-patent literature cited in the description**

- *Office of Saline Water Research and Development Progress Report,* 1968